(19)

Europäisches
Patentamt
European
Patent Office
Office européen
des brevets

(11) **EP 4 779 906 A1**

(12) **EUROPEAN PATENT APPLICATION**
published in accordance with Art. 153(4) EPC

(43) Date of publication:
**22.07.2026 Bulletin 2026/30**

(21) Application number: **23952511.6**

(22) Date of filing: **19.09.2023**

(51) International Patent Classification (IPC):
**H04L 1/00** (2006.01)

(52) Cooperative Patent Classification (CPC):
**H04L 1/00**

(86) International application number:
**PCT/CN2023/119660**

(87) International publication number:
**WO 2025/059846 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **HUAWEI TECHNOLOGIES CO., LTD.
Shenzhen 518129 (CN)**

(72) Inventors:
• **ZHANG, Gongzheng
Shenzhen, Guangdong 518129 (CN)**

• **XU, Chen
Shenzhen, Guangdong 518129 (CN)**
• **WANG, Jian
Shenzhen, Guangdong 518129 (CN)**
• **LI, Rong
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **DATA PROCESSING METHOD AND RELATED APPARATUS**

(57) This application provides a data processing method and a related apparatus. A first apparatus may perform data augmentation on first training data, to improve an amount and diversity of training data. This helps train a transmitter/receiver model (for example, a transmitter/receiver neural network), and improves a training speed and training performance of the transmitter/receiver model. The method in embodiments of this application includes: A first apparatus receives first training data from a second apparatus; and the first apparatus performs data augmentation on the first training data, to obtain augmented training data.

FIG. 4

**Description**

## TECHNICAL FIELD

This application relates to the field of communication technologies, and in particular, to a data processing method and a related apparatus.

## BACKGROUND

A transmitter and a receiver may communicate with each other through an air interface. The transmitter and the receiver may be implemented based on neural networks. Currently, better transmitting performance of a neural network of the transmitter can be implemented through data training, and better receiving performance of a neural network of the receiver can be implemented through data training.

The transmitter and the receiver are trained for a radio environment. Specifically, training data related to the radio environment is collected between the transmitter and the receiver through air interface data transmission, and a transmitter/receiver neural network is trained based on the training data. However, a channel parameter (for example, channel distribution) in the radio environment usually changes slowly. Therefore, training data collected by the transmitter and the receiver in a short time usually has a strong correlation, and is not conducive to training of the transmitter/receiver neural network. Consequently, a training speed and training performance of the transmitter/receiver neural network are reduced.

## SUMMARY

This application provides a data processing method and a related apparatus. A first apparatus may perform data augmentation on first training data, to improve an amount and diversity of training data, facilitate training of a transmitter/receiver model (for example, a transmitter/receiver neural network), and improve a training speed and training performance of the transmitter/receiver model.

A first aspect of this application provides a data processing method. The method may be performed by a first apparatus. The first apparatus may be a terminal device or a network device, a component (for example, a processor, a chip, or a chip system) in a terminal device or a network device, a logical module or software that can implement all or some of functions of a terminal device, or a logical module or software that can implement all or some of functions of a network device. The method includes:

The first apparatus receives first training data from a second apparatus; and then the first apparatus performs data augmentation on the first training data, to obtain augmented training data. It can be learned that the first apparatus may perform data augmentation on the first training data, to improve an amount and diversity of training data, facilitate training of a transmitter/receiver model (for example, a transmitter/receiver neural network), and improve a training speed and training performance of the transmitter/receiver model. For example, the first apparatus may train a receiving model of the first apparatus based on the augmented training data, to improve a training speed and training performance of the receiving model.

According to the first aspect, in a possible implementation, that the first apparatus performs data augmentation on the first training data, to obtain the augmented training data includes: The first apparatus obtains a data augmentation configuration; and the first apparatus performs data augmentation on the first training data based on the data augmentation configuration, to obtain the augmented training data. It can be learned that the first apparatus may perform data augmentation on the first training data based on the data augmentation configuration, so that an amount of training data is larger, and the training data is more diversified, and a training speed and training performance of the model are improved.

According to the first aspect, in a possible implementation, that the first apparatus performs data augmentation on the first training data, to obtain the augmented training data includes: The first apparatus determines a data augmentation method for the first training data; and the first apparatus performs data augmentation on the first training data according to the data augmentation method based on a data augmentation parameter and a quantity of augmented samples, to obtain the augmented training data. Optionally, the augmented training data includes a plurality of pieces of augmented sample data. An amount of the augmented sample data may be the quantity of the augmented samples.

According to the first aspect, in a possible implementation, that the first apparatus obtains the data augmentation configuration includes: The first apparatus receives first indication information from the second apparatus, where the first indication information indicates the data augmentation configuration. In this implementation, the second apparatus may indicate the data augmentation configuration to the first apparatus, so that the first apparatus performs appropriate data augmentation on the first training data based on the data augmentation configuration, to facilitate appropriate implementation of the solution, ensure validity of the augmented training data, and improve a training speed and training performance of the model.

According to the first aspect, in a possible implementation, the method further includes: The first apparatus receives second indication information from the second apparatus, where the second indication information indicates a data augmentation configuration available to the first apparatus. That the first apparatus obtains the data augmentation configuration includes: The first apparatus obtains the data augmentation configuration based on the data augmentation configuration that is available to the first apparatus and that is indicated by the second indication information. In this way, the first apparatus selects an appropriate data augmentation configuration from the data augmentation configuration available to the first apparatus, or the first apparatus may determine an appropriate data augmentation configuration based on the data augmentation configuration available to the first apparatus, to ensure validity of the augmented training data, and improve a training speed and training performance of the model.

According to the first aspect, in a possible implementation, the second indication information further indicates a priority of the data augmentation configuration available to the first apparatus. In this way, the first apparatus selects, based on an actual requirement, a data augmentation configuration of a corresponding priority to perform data augmentation on the first training data, to improve a training speed and training performance of the model.

According to the first aspect, in a possible implementation, the data augmentation configuration includes at least one of the following: a data augmentation method, a data augmentation parameter, or a quantity of augmented samples. Some possible elements included in the data augmentation configuration are shown, to make the solution more comprehensive.

According to the first aspect, in a possible implementation, the data augmentation method includes at least one of the following: noise addition, signal phase rotation, signal random phase processing, channel simulation processing, or signal rearrangement. In this way, the solution is implemented, a larger amount of training data and more diversified training data can be obtained, and a training speed and training performance of the model are improved.

According to the first aspect, in a possible implementation, the data augmentation parameter includes at least one of the following: noise power, a signal phase rotation angle, distribution or a range of random phases used for the signal random phase processing, a ratio of amplitudes of elements of a diagonal matrix used for the channel simulation processing, or a rearrangement unit of a signal in time domain and/or frequency domain. In this implementation, for various data augmentation methods, specific forms of the data augmentation parameter are shown, to facilitate implementation of the solution.

According to the first aspect, in a possible implementation, the method further includes: The first apparatus trains the receiving model of the first apparatus based on the augmented training data, where the receiving model is used by the first apparatus to receive data and/or information. In this way, the first apparatus can quickly train the receiving model based on the augmented training data, to improve a training speed and performance of the receiving model. It should be noted that the implementation may be used as an independent aspect, and does not depend on the first aspect or another implementation of the first aspect.

According to the first aspect, in a possible implementation, the receiving model is configured to implement at least one of the following: channel estimation, equalization, channel decoding, symbol demodulation, waveform demodulation, or source decoding. In this implementation, some possible functions that can be implemented by the receiving model are shown. It should be noted that different functions may be implemented by using different models or a same model, so that a traditional air interface processing module is replaced by the receiving model, and intelligent air interface transmission is implemented.

According to the first aspect, in a possible implementation, the method further includes: The first apparatus generates an intermediate training parameter and/or a loss value based on the augmented training data; and the first apparatus sends, to the second apparatus, at least one of the following: the intermediate training parameter, the loss value, or a weighted value, where the weighted value is determined based on the intermediate training parameter or the loss value. In this way, the second apparatus trains a sending model of the second apparatus based on the intermediate training parameter, the loss value, or the weighted value. Because the augmented training data includes a larger amount of training data, and the training data is more diversified, the first apparatus may feed back more intermediate training parameters and loss values, to improve a training speed and training performance of the sending model of the second apparatus.

According to the first aspect, in a possible implementation, the first training data includes channel data between the first apparatus and the second apparatus. Before the first apparatus receives the first training data from the second apparatus, the method further includes: The first apparatus sends a reference signal to the second apparatus, where the reference signal is used to determine the channel data. In this way, the second apparatus obtains the first training data.

A second aspect of this application provides a data processing method. The method may be performed by a second apparatus. The second apparatus may be a terminal device or a network device, a component (for example, a processor, a chip, or a chip system) in a terminal device or a network device, a logical module or software that can implement all or some of functions of a terminal device, or a logical module or software that can implement all or some of functions of a network device. The method includes:

The second apparatus sends first training data to a first apparatus, where the first training data is configured to perform data augmentation on the first training data, to obtain augmented training data. Because the augmented training data includes a larger amount of training data, and the training data is more diversified, a training speed and training performance of the first apparatus for a receiving model of the first apparatus are improved, and/or the first apparatus may feed back more intermediate training parameters and loss values to the second apparatus, to improve a training speed and training performance of a sending model of the second apparatus.

According to the second aspect, in a possible implementation, the method further includes: The second apparatus sends first indication information to the first apparatus, where the first indication information indicates a data augmentation configuration, and the data augmentation configuration is used to perform data augmentation on the first training data. In this implementation, the second apparatus may indicate the data augmentation configuration to the first apparatus, so that the first apparatus performs appropriate data augmentation on the first training data based on the data augmentation configuration, to facilitate appropriate implementation of the solution, ensure validity of the augmented training data, and improve a training speed and training performance of the model.

According to the second aspect, in a possible implementation, the method further includes: The second apparatus sends second indication information to the first apparatus, where the second indication information indicates a data augmentation configuration available to the first apparatus. In this way, the first apparatus selects an appropriate data augmentation configuration, to ensure validity of the augmented training data, and improve a training speed and training performance of the model.

According to the second aspect, in a possible implementation, the second indication information further indicates a priority of the data augmentation configuration available to the first apparatus. In this way, the first apparatus selects, based on an actual requirement, a data augmentation configuration of a corresponding priority to perform data augmentation on the first training data, to improve a training speed and training performance of the model.

According to the second aspect, in a possible implementation, the data augmentation configuration includes at least one of the following: a data augmentation method, a data augmentation parameter, or a quantity of augmented samples. Some possible elements included in the data augmentation configuration are shown, to make the solution more comprehensive.

According to the second aspect, in a possible implementation, the data augmentation method includes any one of the following: noise addition, signal phase rotation, signal random phase processing, channel simulation processing, or signal rearrangement. In this way, the solution is implemented, a larger amount of training data and more diversified training data can be obtained, and a training speed and training performance of the model are improved.

According to the second aspect, in a possible implementation, the data augmentation parameter includes at least one of the following: noise power, a signal phase rotation angle, distribution or a range of random phases used for the signal random phase processing, a ratio of amplitudes of elements of a diagonal matrix used for the channel simulation processing, or a rearrangement unit of a signal in time domain and/or frequency domain. In this implementation, for various data augmentation methods, specific forms of the data augmentation parameter are shown, to facilitate implementation of the solution.

According to the second aspect, in a possible implementation, the data augmentation configuration is determined based on a configuration of the receiving model of the first apparatus, a configuration of the sending model of the second apparatus, and/or a change speed of a channel between the first apparatus and the second apparatus, the receiving model is used by the first apparatus to receive data and/or information, and the sending model is used by the second apparatus to send data and/or information. In this way, the second apparatus configures an appropriate data augmentation configuration for the first apparatus, to ensure validity of the augmented training data, and improve a training speed and training performance of the model.

According to the second aspect, in a possible implementation, the method further includes: The second apparatus receives, from the first apparatus, at least one of the following: an intermediate training parameter, a loss value, or a weighted value, where the intermediate training parameter or the loss value is determined based on the augmented training data, and the weighted value is determined based on the intermediate training parameter or the loss value; and the second apparatus trains the sending model based on at least one of the intermediate training parameter, the loss value, and the weighted value, where the sending model is used by the second apparatus to send data and/or information. Because the augmented training data includes a larger amount of training data, and the training data is more diversified, the first apparatus may feed back more intermediate training parameters and loss values, to improve a training speed and training performance of the sending model of the second apparatus. It should be noted that the implementation may be used as an independent aspect, and does not depend on the second aspect or any one of the implementations of the second aspect.

According to the second aspect, in a possible implementation, the sending model is configured to implement at least one of the following: channel encoding, symbol modulation, waveform modulation, or source encoding. In this implementation, some possible functions that can be implemented by the sending model are shown. It should be noted that different functions may be implemented by using different models or a same model, so that a traditional air interface processing module is replaced by the sending model, and intelligent air interface transmission is implemented.

According to the second aspect, in a possible implementation, the first training data includes channel data between the first apparatus and the second apparatus. The method further includes: The second apparatus receives a reference signal from the first apparatus; and the second apparatus measures the reference signal, to obtain the channel data. In this implementation, the second apparatus obtains the channel data by measuring the reference signal, so that the second apparatus and the first apparatus perform model training based on the channel data.

A third aspect of this application provides a data processing method. The method may be performed by a first apparatus. The first apparatus may be a terminal device or a network device, a component (for example, a processor, a chip, or a chip system) in a terminal device or a network device, a logical module or software that can implement all or some of functions of a terminal device, or a logical module or software that can implement all or some of functions of a network device. The method includes:

The first apparatus receives augmented training data from a second apparatus, where the augmented training data is obtained by performing data augmentation on first training data. It can be learned that the first apparatus can obtain a larger amount of training data and more diversified training data, to facilitate training of a transmitter/receiver model (for example, a transmitter/receiver neural network), and improve a training speed and training performance of the transmitter/receiver model. For example, the first apparatus may train a receiving model of the first apparatus based on the augmented training data, to improve a training speed and training performance of the receiving model.

According to the third aspect, in a possible implementation, the method further includes: The first apparatus sends first indication information to the second apparatus, where the first indication information indicates a data augmentation configuration, and the data augmentation configuration is used to perform data augmentation on the first training data. In this implementation, the first apparatus may indicate the data augmentation configuration to the second apparatus, so that the second apparatus performs data augmentation on the first training data based on the data augmentation configuration, to facilitate appropriate implementation of the solution, ensure validity of the augmented training data, and improve a training speed and training performance of the model.

According to the third aspect, in a possible implementation, the method further includes: The first apparatus sends second indication information to the second apparatus, where the second indication information indicates a data augmentation configuration available to the second apparatus. In this way, the second apparatus selects an appropriate data augmentation configuration, to ensure validity of the augmented training data, and improve a training speed and training performance of the model.

According to the third aspect, in a possible implementation, the second indication information further indicates a priority of the data augmentation configuration available to the second apparatus. In this way, the second apparatus selects, based on an actual requirement, a data augmentation configuration of a corresponding priority to perform data augmentation on the first training data, to improve a training speed and training performance of the model.

According to the third aspect, in a possible implementation, the data augmentation configuration includes at least one of the following: a data augmentation method, a data augmentation parameter, or a quantity of augmented samples. Some possible elements included in the data augmentation configuration are shown, to make the solution more comprehensive.

According to the third aspect, in a possible implementation, the data augmentation method includes any one of the following: noise addition, signal phase rotation, signal random phase processing, channel simulation processing, or signal rearrangement. In this way, the solution is implemented, a larger amount of training data and more diversified training data can be obtained, and a training speed and training performance of the model are improved.

According to the third aspect, in a possible implementation, the data augmentation parameter includes at least one of the following: noise power, a signal phase rotation angle, distribution or a range of random phases used for the signal random phase processing, a ratio of amplitudes of elements of a diagonal matrix used for the channel simulation processing, or a rearrangement unit of a signal in time domain and/or frequency domain. In this implementation, for various data augmentation methods, specific forms of the data augmentation parameter are shown, to facilitate implementation of the solution.

According to the third aspect, in a possible implementation, the method further includes: The first apparatus determines an intermediate training parameter and/or a loss value based on the augmented training data; and the first apparatus sends, to the second apparatus, at least one of the following: the intermediate training parameter, the loss value, or a weighted value, where the intermediate training parameter or the loss value is determined based on the augmented training data, and the weighted value is determined based on the intermediate training parameter or the loss value. In this way, the second apparatus trains a sending model of the second apparatus based on the intermediate training parameter, the loss value, or the weighted value. Because the augmented training data includes a larger amount of training data, and the training data is more diversified, the first apparatus may feed back more intermediate training parameters and loss values, to improve a training speed and training performance of the sending model of the second apparatus.

According to the third aspect, in a possible implementation, the method further includes: The first apparatus trains a receiving model of the first apparatus based on the augmented training data, where the receiving model is used by the first apparatus to receive data and/or information. In this way, the first apparatus can quickly train the receiving model based on the augmented training data, to improve a training speed and performance of the receiving model.

According to the third aspect, in a possible implementation, the receiving model is configured to implement at least one of the following: channel estimation, equalization, channel decoding, symbol demodulation, waveform demodulation, or source decoding. In this implementation, some possible functions that can be implemented by the receiving model are shown. It should be noted that different functions may be implemented by using different models or a same model, so that a traditional air interface processing module is replaced by the receiving model, and intelligent air interface transmission is implemented.

According to the third aspect, in a possible implementation, the first training data includes channel data between the first apparatus and the second apparatus. Before the first apparatus receives the augmented training data from the second apparatus, the method further includes: The first apparatus sends a reference signal to the second apparatus, where the reference signal is used to determine the channel data. In this way, the second apparatus obtains the first training data.

A fourth aspect of this application provides a data processing method. The method may be performed by a second apparatus. The second apparatus may be a terminal device or a network device, a component (for example, a processor, a chip, or a chip system) in a terminal device or a network device, a logical module or software that can implement all or some of functions of a terminal device, or a logical module or software that can implement all or some of functions of a network device. The method includes:

The second apparatus performs data augmentation on first training data, to obtain augmented training data; and the second apparatus sends the augmented training data to a first apparatus. It can be learned that the second apparatus may perform data augmentation on the first training data, and send the augmented training data to the first apparatus, to improve an amount and diversity of training data, facilitate training of a transmitter/receiver model (for example, a transmitter/receiver neural network), and improve a training speed and training performance of the transmitter/receiver model. For example, the first apparatus may train a receiving model of the first apparatus based on the augmented training data, to improve a training speed and training performance of the receiving model. The second apparatus may train a sending model of the second apparatus based on the augmented training data, to improve a training speed and training performance of the sending model.

According to the fourth aspect, in a possible implementation, the method further includes: The second apparatus obtains a data augmentation configuration. That the second apparatus performs data augmentation on the first training data, to obtain the augmented training data includes: The second apparatus performs data augmentation on the first training data based on the data augmentation configuration, to obtain the augmented training data. It can be learned that the second apparatus may perform data augmentation on the first training data based on the data augmentation configuration, so that an amount of training data is larger, and the training data is more diversified, and a training speed and training performance of the model are improved.

According to the fourth aspect, in a possible implementation, that the second apparatus obtains the data augmentation configuration includes: The second apparatus receives first indication information from the first apparatus, where the first indication information indicates the data augmentation configuration. In this implementation, the first apparatus may indicate the data augmentation configuration to the second apparatus. In this way, the second apparatus performs data augmentation on the first training data based on the data augmentation configuration, to facilitate appropriate implementation of the solution, ensure validity of the augmented training data, and improve a training speed and training performance of the model.

According to the fourth aspect, in a possible implementation, the method further includes: The second apparatus receives second indication information from the first apparatus, where the second indication information indicates a data augmentation configuration available to the second apparatus. That the second apparatus obtains the data augmentation configuration includes: The second apparatus obtains the data augmentation configuration based on the data augmentation configuration that is available to the second apparatus and that is indicated by the second indication information. In this way, the second apparatus selects an appropriate data augmentation configuration from the data augmentation configuration available to the second apparatus, or the second apparatus may determine an appropriate data augmentation configuration based on the data augmentation configuration available to the second apparatus, to ensure validity of the augmented training data, and improve a training speed and training performance of the model.

According to the fourth aspect, in a possible implementation, the data augmentation configuration includes at least one of the following: a data augmentation method, a data augmentation parameter, or a quantity of augmented samples. Some possible elements included in the data augmentation configuration are shown, to make the solution more comprehensive.

According to the fourth aspect, in a possible implementation, the data augmentation method includes any one of the following: noise addition, signal phase rotation, signal random phase processing, channel simulation processing, or signal rearrangement. In this way, the solution is implemented, a larger amount of training data and more diversified training data can be obtained, and a training speed and training performance of the model are improved.

According to the fourth aspect, in a possible implementation, the data augmentation parameter includes at least one of the following: noise power, a signal phase rotation angle, distribution or a range of random phases used for the signal random phase processing, a ratio of amplitudes of elements of a diagonal matrix used for the channel simulation processing, or a rearrangement unit of a signal in time domain and/or frequency domain. In this implementation, for various data augmentation methods, specific forms of the data augmentation parameter are shown, to facilitate implementation of the solution.

According to the fourth aspect, in a possible implementation, the method further includes: The second apparatus receives, from the first apparatus, at least one of the following: an intermediate training parameter, a loss value, or a weighted value, where the intermediate training parameter or the loss value is determined based on the augmented training data, and the weighted value is determined based on the intermediate training parameter or the loss value; and the second apparatus trains the sending model of the second apparatus based on at least one of the intermediate training parameter, the loss value, and the weighted value, where the sending model is used by the second apparatus to send data and/or information. Because the augmented training data includes a larger amount of training data, and the training data is more diversified, the first apparatus may feed back more intermediate training parameters and loss values, to improve a training speed and training performance of the sending model of the second apparatus.

According to the fourth aspect, in a possible implementation, the sending model is configured to implement at least one of the following: channel encoding, symbol modulation, waveform modulation, or source encoding. In this implementation, some possible functions that can be implemented by the sending model are shown. It should be noted that different functions may be implemented by using different models or a same model, so that a traditional air interface processing module is replaced by the sending model, and intelligent air interface transmission is implemented.

According to the fourth aspect, in a possible implementation, the first training data includes channel data between the first apparatus and the second apparatus. The method further includes: The second apparatus receives a reference signal from the first apparatus; and the second apparatus measures the reference signal, to obtain the channel data. In this implementation, the second apparatus obtains the channel data by measuring the reference signal, so that the second apparatus and the first apparatus perform model training based on the channel data.

A fifth aspect of this application provides a first apparatus, including:

a transceiver module, configured to receive first training data from a second apparatus; and
a processing module, configured to perform data augmentation on first training data, to obtain augmented training data.

According to the fifth aspect, in a possible implementation, the processing module is further configured to obtain a data augmentation configuration.

The processing module is specifically configured to:
perform data augmentation on the first training data based on the data augmentation configuration, to obtain the augmented training data.

According to the fifth aspect, in a possible implementation, the processing module is specifically configured to: receive first indication information from the second apparatus, where the first indication information indicates the data augmentation configuration.

According to the fifth aspect, in a possible implementation, the processing module is specifically configured to:

receive second indication information from the second apparatus, where the second indication information indicates a data augmentation configuration available to the first apparatus; and
obtain the data augmentation configuration based on the data augmentation configuration that is available to the first apparatus and that is indicated by the second indication information.

According to the fifth aspect, in a possible implementation, the second indication information further indicates a priority of the data augmentation configuration available to the first apparatus.

According to the fifth aspect, in a possible implementation, the data augmentation configuration includes at least one of the following: a data augmentation method, a data augmentation parameter, or a quantity of augmented samples.

According to the fifth aspect, in a possible implementation, the data augmentation method includes at least one of the following: noise addition, signal phase rotation, signal random phase processing, channel simulation processing, or signal rearrangement.

According to the fifth aspect, in a possible implementation, the data augmentation parameter includes at least one of the following: noise power, a signal phase rotation angle, distribution or a range of random phases used for the signal random phase processing, a ratio of amplitudes of elements of a diagonal matrix used for the channel simulation processing, or a rearrangement unit of a signal in time domain and/or frequency domain.

According to the fifth aspect, in a possible implementation, the processing module is further configured to:
train a receiving model of the first apparatus based on the augmented training data, where the receiving model is used by the first apparatus to receive data.

According to the fifth aspect, in a possible implementation, the receiving model is configured to implement at least one of the following: channel estimation, equalization, channel decoding, symbol demodulation, waveform demodulation, or source decoding.

According to the fifth aspect, in a possible implementation, the processing module is further configured to: generate an intermediate training parameter and/or a loss value based on the augmented training data.

The transceiver module is further configured to send, to the second apparatus, at least one of the following: the intermediate training parameter, the loss value, or a weighted value, where the weighted value is determined based on the intermediate training parameter or the loss value. Optionally, the intermediate training parameter, the loss value, and/or the weighted value are/is used to train a sending model of the second apparatus.

A sixth aspect of this application provides a second apparatus, including:
a transceiver module, configured to send first training data to a first apparatus, where the first training data is configured to perform data augmentation on the first training data, to obtain augmented training data.

According to the sixth aspect, in a possible implementation, the transceiver module is further configured to: send first indication information to the first apparatus, where the first indication information indicates a data augmentation configuration, and the data augmentation configuration is used to perform data augmentation on the first training data.

According to the sixth aspect, in a possible implementation, the transceiver module is further configured to: send second indication information to the first apparatus, where the second indication information indicates a data augmentation configuration available to the first apparatus.

According to the sixth aspect, in a possible implementation, the second indication information further indicates a priority of the data augmentation configuration available to the first apparatus.

According to the sixth aspect, in a possible implementation, the data augmentation configuration includes at least one of the following: a data augmentation method, a data augmentation parameter, or a quantity of augmented samples.

According to the sixth aspect, in a possible implementation, the data augmentation method includes any one of the following: noise addition, signal phase rotation, signal random phase processing, channel simulation processing, or signal rearrangement.

According to the sixth aspect, in a possible implementation, the data augmentation parameter includes at least one of the following: noise power, a signal phase rotation angle, distribution or a range of random phases used for the signal random phase processing, a ratio of amplitudes of elements of a diagonal matrix used for the channel simulation processing, or a rearrangement unit of a signal in time domain and/or frequency domain.

According to the sixth aspect, in a possible implementation, the data augmentation configuration is determined based on a configuration of a receiving model of the first apparatus, a configuration of a sending model of the second apparatus, and/or a change speed of a channel between the first apparatus and the second apparatus, the receiving model is used by the first apparatus to receive data and/or information, and the sending model is used by the second apparatus to send data and/or information.

According to the sixth aspect, in a possible implementation, the transceiver module is further configured to receive, from the first apparatus, at least one of the following: an intermediate training parameter, a loss value, or a weighted value, where the intermediate training parameter or the loss value is determined based on the augmented training data, and the weighted value is determined based on the intermediate training parameter or the loss value. The processing module is further configured to train the sending model based on at least one of the intermediate training parameter, the loss value, and the weighted value, where the sending model is used by the second apparatus to send data and/or information.

According to the sixth aspect, in a possible implementation, the sending model is configured to implement at least one of the following: channel encoding, symbol modulation, waveform modulation, or source encoding.

According to the sixth aspect, in a possible implementation, the first training data includes channel data between the first apparatus and the second apparatus. The transceiver module is further configured to receive a reference signal from the first apparatus. The processing module is further configured to measure the reference signal, to obtain channel data.

A seventh aspect of this application provides a first apparatus, including:
a transceiver module, configured to receive augmented training data from a second apparatus, where the augmented training data is obtained by performing data augmentation on first training data.

According to the seventh aspect, in a possible implementation, the transceiver module is further configured to send first indication information to the second apparatus, where the first indication information indicates a data augmentation configuration, and the data augmentation configuration is used to perform data augmentation on the first training data.

According to the seventh aspect, in a possible implementation, the transceiver module is further configured to send second indication information to the second apparatus, where the second indication information indicates a data augmentation configuration available to the second apparatus.

According to the seventh aspect, in a possible implementation, the second indication information further indicates a priority of the data augmentation configuration available to the second apparatus.

According to the seventh aspect, in a possible implementation, the data augmentation configuration includes at least one of the following: a data augmentation method, a data augmentation parameter, or a quantity of augmented samples.

According to the seventh aspect, in a possible implementation, the data augmentation method includes any one of the following: noise addition, signal phase rotation, signal random phase processing, channel simulation processing, or signal rearrangement.

According to the seventh aspect, in a possible implementation, the data augmentation parameter includes at least one of the following: noise power, a signal phase rotation angle, distribution or a range of random phases used for the signal random phase processing, a ratio of amplitudes of elements of a diagonal matrix used for the channel simulation processing, or a rearrangement unit of a signal in time domain and/or frequency domain.

According to the seventh aspect, in a possible implementation, the first apparatus further includes a processing module.

The processing module is configured to determine an intermediate training parameter and/or a loss value based on the augmented training data.

The transceiver module is configured to send, to the second apparatus, at least one of the following: the intermediate training parameter, the loss value, or a weighted value, where the intermediate training parameter or the loss value is determined based on the augmented training data, and the weighted value is determined based on the intermediate training parameter or the loss value.

According to the seventh aspect, in a possible implementation, the first apparatus further includes the processing module.

The processing module is configured to train a receiving model of the first apparatus based on the augmented training data, where the receiving model is used by the first apparatus to receive data and/or information.

According to the seventh aspect, in a possible implementation, the receiving model is configured to implement at least one of the following: channel estimation, equalization, channel decoding, symbol demodulation, waveform demodulation, or source decoding.

According to the seventh aspect, in a possible implementation, the first training data includes channel data between the first apparatus and the second apparatus. The transceiver module is further configured to send a reference signal to the second apparatus, where the reference signal is used to determine the channel data.

An eighth aspect of this application provides a second apparatus, including:

a processing module, configured to perform data augmentation on first training data, to obtain augmented training data; and
a transceiver module, configured to send the augmented training data to a first apparatus.

According to the eighth aspect, in a possible implementation, the processing module is specifically configured to: obtain a data augmentation configuration; and perform data augmentation on the first training data based on the data augmentation configuration, to obtain the augmented training data.

According to the eighth aspect, in a possible implementation, the processing module is specifically configured to: receive first indication information from the first apparatus, where the first indication information indicates the data augmentation configuration.

According to the eighth aspect, in a possible implementation, the processing module is specifically configured to:

receive second indication information from the first apparatus, where the second indication information indicates a data augmentation configuration available to the first apparatus; and
obtain the data augmentation configuration based on the data augmentation configuration that is available to the first apparatus and that is indicated by the second indication information.

According to the eighth aspect, in a possible implementation, the data augmentation configuration includes at least one of the following: a data augmentation method, a data augmentation parameter, or a quantity of augmented samples.

According to the eighth aspect, in a possible implementation, the data augmentation method includes any one of the following: noise addition, signal phase rotation, signal random phase processing, channel simulation processing, or signal rearrangement.

According to the eighth aspect, in a possible implementation, the data augmentation parameter includes at least one of the following: noise power, a signal phase rotation angle, distribution or a range of random phases used for the signal random phase processing, a ratio of amplitudes of elements of a diagonal matrix used for the channel simulation processing, or a rearrangement unit of a signal in time domain and/or frequency domain.

According to the eighth aspect, in a possible implementation, the transceiver module is further configured to receive, from the first apparatus, at least one of the following: an intermediate training parameter, a loss value, or a weighted value, where the intermediate training parameter or the loss value is determined based on the augmented training data, and the weighted value is determined based on the intermediate training parameter or the loss value.

According to the eighth aspect, in a possible implementation, the processing module is further configured to train a sending model of the second apparatus According to at least one of the intermediate training parameter, the loss value, and the weighted value, where the sending model is used by the second apparatus to send data and/or information.

According to the eighth aspect, in a possible implementation, the sending model is configured to implement at least one of the following: channel encoding, symbol modulation, waveform modulation, or source encoding.

According to the eighth aspect, in a possible implementation, the first training data includes channel data between the first apparatus and the second apparatus. The transceiver module is further configured to receive a reference signal from the first apparatus. The processing module is further configured to measure the reference signal, to obtain channel data.

A ninth aspect of this application provides a first apparatus. The first apparatus includes a processor and a memory. The memory stores a computer program or computer instructions, and the processor is configured to invoke and run the computer program or the computer instructions stored in the memory, so that the processor implements any one of the implementations of the first aspect or the third aspect.

Optionally, the first apparatus further includes a transceiver, and the processor is configured to control the transceiver to receive or send a signal.

A tenth aspect of this application provides a second apparatus. The second apparatus includes a processor and a memory. The memory stores a computer program or computer instructions, and the processor is configured to invoke and run the computer program or the computer instructions stored in the memory, so that the processor implements any one of the implementations of the second aspect or the fourth aspect.

Optionally, the second apparatus further includes a transceiver, and the processor is configured to control the transceiver to receive or send a signal.

An eleventh aspect of this application provides a first apparatus, including a processor and an interface circuit. The processor is configured to: communicate with another apparatus through the interface circuit, and perform the method in either the first aspect or the third aspect. There are one or more processors.

A twelfth aspect of this application provides a second apparatus, including a processor and an interface circuit. The processor is configured to: communicate with another apparatus through the interface circuit, and perform the method in either the second aspect or the fourth aspect. There are one or more processors.

A thirteenth aspect of this application provides a first apparatus, including a processor, configured to: connect to a memory, and invoke a program stored in the memory, to perform the method in either the first aspect or the third aspect. The memory may be located inside the first apparatus, or may be located outside the first apparatus. In addition, there are one or more processors.

A fourteenth aspect of this application provides a second apparatus, including a processor, configured to: connect to a memory, and invoke a program stored in the memory, to perform the method in either the second aspect or the fourth aspect. The memory may be located inside the second apparatus, or may be located outside the second apparatus. In addition, there are one or more processors.

In an implementation, the first apparatus in the fifth aspect, the seventh aspect, or the ninth aspect may be a chip or a chip system.

In an implementation, the second apparatus in the sixth aspect, the eighth aspect, or the tenth aspect may be a chip or a chip system.

A fifteenth aspect of this application provides a computer program product including computer instructions. When the computer program product runs on a computer, the computer is enabled to perform any one of the implementations of any one of the first aspect to the fourth aspect.

A sixteenth aspect of this application provides a computer-readable storage medium, including computer instructions. When the instructions are run on a computer, the computer is enabled to perform any one of the implementations of any one of the first aspect to the fourth aspect.

A seventeenth aspect of this application provides a chip apparatus, including a processor, configured to invoke a computer program or computer instructions in a memory, so that the processor performs any one of the implementations of any one of the first aspect to the fourth aspect.

Optionally, the processor is coupled to the memory through an interface.

An eighteenth aspect of this application provides a communication system. The communication system includes a first apparatus and a second apparatus. The first apparatus is configured to perform the method in the first aspect, and the second apparatus is configured to perform the method in the second aspect. Alternatively, the first apparatus is configured to perform the method in the third aspect, and the second apparatus is configured to perform the method in the fourth aspect.

It can be learned from the foregoing technical solution that the first apparatus receives first training data from the second apparatus. Then, the first apparatus performs data augmentation on the first training data, to obtain augmented training data. It can be learned that the first apparatus may perform data augmentation on the first training data, so that an amount and diversity of training data can be improved. This helps train a transmitter/receiver model (for example, a transmitter/receiver neural network), and improves a training speed and training performance of the transmitter/receiver model. For example, the first apparatus may train a receiving model of the first apparatus based on the augmented training data, to improve a training speed and training performance of the receiving model.

## BRIEF DESCRIPTION OF DRAWINGS

FIG. 1 is a diagram of a communication system according to an embodiment of this application;
FIG. 2A is a diagram of some functions implemented by a sending model according to an embodiment of this application;
FIG. 2B is a diagram of some functions implemented by a receiving model according to an embodiment of this application;
FIG. 3A is another diagram of a communication system according to an embodiment of this application;
FIG. 3B is still another diagram of a communication system according to an embodiment of this application;
FIG. 3C is yet another diagram of a communication system according to an embodiment of this application;
FIG. 4 is a diagram of an embodiment of a data processing method according to an embodiment of this application;
FIG. 5 is a schematic flowchart of a data processing method according to an embodiment of this application;
FIG. 6 is a diagram of another embodiment of a data processing method according to an embodiment of this application;
FIG. 7 is a diagram of a structure of a first apparatus according to an embodiment of this application;
FIG. 8 is a diagram of another structure of a first apparatus according to an embodiment of this application;
FIG. 9 is a diagram of a structure of a second apparatus according to an embodiment of this application;
FIG. 10 is a diagram of another structure of a second apparatus according to an embodiment of this application;
FIG. 11 is a diagram of a structure of an apparatus according to an embodiment of this application;
FIG. 12 is a diagram of another structure of an apparatus according to an embodiment of this application; and
FIG. 13 is a diagram of still another structure of an apparatus according to an embodiment of this application.

## DESCRIPTION OF EMBODIMENTS

This application provides a data processing method and a related apparatus. A first apparatus may perform data augmentation on first training data, to improve an amount and diversity of training data, facilitate training of a transmitter/receiver model (for example, a transmitter/receiver neural network), and improve a training speed and training performance of the transmitter/receiver model.

The following clearly and completely describes the technical solutions in embodiments of this application with reference to the accompanying drawings in embodiments of this application. It is clear that the described embodiments are merely some but not all of embodiments of this application. All other embodiments obtained by a person skilled in the art based on embodiments of this application without creative efforts shall fall within the protection scope of this application.

Reference to "an embodiment", "some embodiments", or the like described in this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized.

In descriptions of this application, unless otherwise specified, "/" means "or". For example, A/B may represent A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. At least one of the following items (pieces) or a similar expression thereof indicates any combination of these items, including a single item (piece) or any combination of a plurality of items (pieces). For example, at least one item (piece) of a, b, or c may indicate a, b, c, a and b, a and c, b and c, or a, b, and c, a, b, and c each may be singular or plural.

It may be understood that, in this application, an "indication" may include a direct indication, an indirect indication, an explicit indication, and an implicit indication. When a piece of indication information is described as indicating A, it may be understood as that the indication information carries A, directly indicates A, or indirectly indicates A.

In this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information itself or an index of the to-be-indicated information, may be directly indicated, or a manner in which the to-be-indicated information may be indirectly indicated by indicating other information. There is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit end device by sending configuration information to a receive end device.

It may be understood that "sending" and "receiving" in this application indicate a signal transmission direction. For example, "sending information to XX" may be understood as that a destination end of the information is XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY through an air interface from another unit or module. "Sending" may alternatively be understood as "outputting" of a chip interface, and "receiving" may alternatively be understood as "inputting" of a chip interface.

In other words, sending and receiving may be performed between devices, for example, between a network device and a terminal device; or may be performed inside a device, for example, sending or receiving between components, modules, chips, software modules, or hardware modules inside the device through a bus, a cable, or an interface.

It may be understood that necessary processing, such as encoding and modulation, may be performed on the information between the source at which the information is sent and the destination, but the destination may understand valid information from the source. Similar descriptions in this application may be understood similarly, and details are not described again.

The technical solutions of this application may be applied to a cellular communication system related to the 3rd generation partnership project (3rd generation partnership project, 3GPP), for example, a fourth generation (4th generation, 4G) communication system, a fifth generation (5th generation, 5G) communication system, or a communication system after the fifth generation communication system, for example, a sixth generation communication system. For example, the fourth generation communication system may include a long term evolution (long term evolution, LTE) communication system. The fifth generation communication system may include a new radio (new radio, NR) communication system. The technical solutions of this application may also be applied to a wireless fidelity (wireless fidelity, Wi-Fi) system, a communication system that supports convergence of a plurality of wireless technologies, a device-to-device (device-to-device, D2D) system, a vehicle-to-everything (vehicle to everything, V2X) communication system, a satellite communication system, and the like. The wireless communication system in this application further includes but is not limited to a narrowband internet of things (narrowband internet of things, NB-IoT) system, a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA2000) system, or a time division-synchronization code division multiple access (time division-synchronization code division multiple access, TD-SCDMA) system.

A communication system to which the technical solutions of this application are applicable includes a first apparatus and a second apparatus. The first apparatus has a receiver, and the receiver is configured to receive data, information, and/or the like. Optionally, the receiver may be implemented by using a receiving model, and the receiving model is configured to receive data and/or information. The receiving model may be a receiving neural network or another artificial intelligence (artificial intelligence, AI) model. This is not specifically limited in this application. The second apparatus has a transmitter, and the transmitter is configured to send data, information, and/or the like. Optionally, the transmitter is implemented by using a sending model, and the sending model is configured to send data and/or information. The sending model may be a sending neural network or another AI model. This is not specifically limited in this application. Optionally, from a perspective of training data receiving and sending, the first apparatus may also be referred to as a receive end apparatus, and the second apparatus may also be referred to as a transmit end apparatus.

Optionally, the first apparatus is a network device or a terminal device; or the first apparatus is a chip, a chip system, or a processor in a network device or a terminal device; or the first apparatus is a logic module, software, or the like that implements some or all of functions of a network device; or the first apparatus is a logic module, software, or the like that implements some or all of functions of a terminal device.

Optionally, the second apparatus is a network device or a terminal device; or the first apparatus is a chip, a chip system, or a processor in a network device or a terminal device; or the first apparatus is a logic module, software, or the like that implements some or all of functions of a network device; or the second apparatus is a logic module, software, or the like that implements some or all of functions of a terminal device.

Optionally, the first apparatus is a terminal device, and the second apparatus is a network device; or the first apparatus is a network device, and the second apparatus is a terminal device. Optionally, the network device is an access network device or a core network device. The following mainly describes the technical solutions of this application by using an example in which the network device is an access network device.

Optionally, the first apparatus is a first terminal device, and the second apparatus is a second terminal device.

Optionally, the first apparatus is a first network device, and the second apparatus is a second network device. For example, the first network device is a first access network device, and the second network device is a second access network device. Alternatively, the first network device is a first core network device, and the second network device is a second core network device. Alternatively, the first network device is an access network device, and the second network device is a core network device. Alternatively, the first network device is a core network device, and the second network device is an access network device. This is not specifically limited in this application.

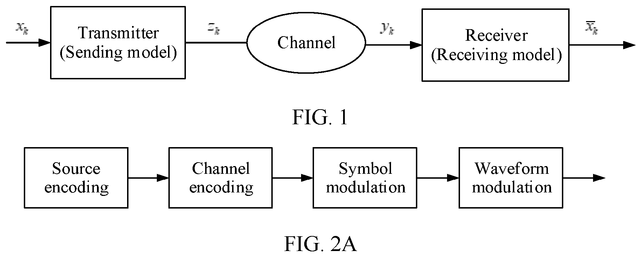

FIG. 1 is a diagram of a communication system according to an embodiment of this application. Refer to FIG. 1. A first apparatus includes a receiver, and the receiver is configured to receive data, information, and/or the like. The receiver may be implemented by using a receiving model. A second apparatus includes a transmitter, and the transmitter is configured to send data, information, and/or the like. The transmitter may be implemented by using a sending model. The transmitter and the receiver communicate with each other through a channel. Optionally, the sending model may be a sending neural network or another AI model. This is not specifically limited in this application. Optionally, the receiving model may be a receiving neural network or another AI model. This is not specifically limited in this application. The transmitter processes data $x_k$ by using the sending model, to obtain data $z_k$. $z_k$ is transmitted through the channel and the receiver receives data $y_k$. $y_k$ by using the receiving model, to obtain data $x_k$.

Optionally, the sending model may replace one or more functional modules used in sending processing. For example, as shown in FIG. 2A, the sending model may implement at least one of the following: source encoding, channel encoding, symbol modulation, or waveform modulation. In other words, the sending model may replace a source encoding module, a channel encoding module, a symbol modulation module, and/or a waveform modulation module in a conventional transmitter.

It should be noted that, in this application, optionally, the sending model includes processing performed by the second apparatus on to-be-sent data and/or information at a physical (physical, PHY) layer, a medium access control (media access control, MAC) layer, a radio resource control (radio resource control, RRC) layer, a packet data convergence protocol (packet data convergence protocol, PDCP) layer, and/or an application (application) layer. Herein, only an example in which the sending model includes processing performed by the second apparatus on the to-be-sent data and/or information at some possible protocol layers is provided. The sending model may further include processing performed by the second apparatus on the to-be-sent data and/or information at another protocol layer. This is not specifically limited in this application.

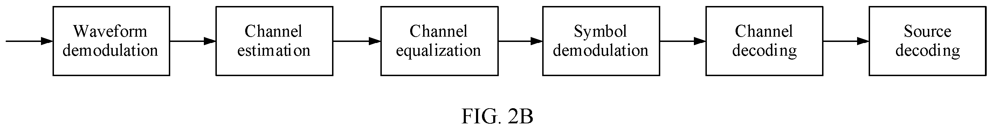

Optionally, the receiving model may replace one or more functional modules used in receiving processing. For example, as shown in FIG. 2B, the receiving model may implement at least one of the following: waveform demodulation, channel estimation, channel equalization, symbol demodulation, channel decoding, or source decoding. In other words, the receiving model may replace a waveform demodulation module, a channel estimation module, a channel equalization module, a symbol demodulation module, a channel decoding module, and/or a source decoding module in a conventional receiver.

It should be noted that, in this application, the receiving model includes processing performed by the first apparatus on received data and/or information at the PHY layer, the MAC layer, the RRC layer, the PDCP layer, and/or the application layer. Herein, only an example in which the receiving model includes processing performed by the first apparatus on the received data and/or information at some possible protocol layers is provided. The receiving model may further include processing performed by the first apparatus on the received data and/or information at another protocol layer. This is not specifically limited in this application.

The following describes a terminal device and a network device in this application.

The terminal device is also referred to as user equipment (user equipment, UE), a mobile station (mobile station, MS), a mobile terminal (mobile terminal, MT), customer premise equipment (customer premise equipment, CPE), or the like. The terminal device is a device that includes a wireless communication function (providing voice/data connectivity to a user), for example, a handheld device having a wireless connection function, a vehicle-mounted device, or a machine type communication (machine type communication, MTC) terminal. Currently, the terminal device may include a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. For example, the wireless terminal in self driving may be an uncrewed aerial vehicle, a helicopter, an airplane, or the like. For example, a wireless terminal in vehicle to everything may be a vehicle-mounted device, vehicle equipment, a vehicle-mounted module, a vehicle, a ship, or the like. The wireless terminal in industrial control may be a camera, a robot, a robotic arm, or the like. The wireless terminal in the smart home may be a television, an air conditioner, a sweeper, a speaker, a set-top box, or the like.

It should be noted that the terminal device may be a device or an apparatus with a chip, a device or an apparatus integrated with a circuit, or a chip, a module, or a control unit in the device or the apparatus shown above. This is not specifically limited in this application.

The network device is a device that is deployed in a radio access network and that provides a wireless communication function for the terminal device. The network device may also be referred to as an access network (radio access network, RAN) entity, an access node, a network node, a communication apparatus, or the like.

Specifically, the network device may be an access network device in a cellular system related to the 3rd generation partnership project (3rd generation partnership project, 3GPP), for example, a 4th generation (fourth-generation, 4G) mobile communication system or a 5G mobile communication system. Alternatively, the network device may be an access network device in an open radio access network (open RAN, O-RAN, or ORAN) or a cloud radio access network (cloud radio access network, CRAN). Alternatively, the network device may be an access network device in a communication system obtained by converging two or more of the foregoing communication systems.

The network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a macro base station, a micro base station, a wireless relay node, a donor node, a wireless controller in a CRAN scenario, a wireless backhaul node, a transmission point (transmission point, TP), or a transmission and receiving point (transmission and receiving point, TRP). The network device may alternatively be an access network device in a 5G mobile communication system, for example, a next generation NodeB (next generation NodeB, gNB), a TRP, or a TP in a new radio (new radio, NR) system, or one antenna panel or a group of antenna panels (including a plurality of antenna panels) of a base station in a 5G mobile communication system. Alternatively, the network device may be a network node that forms a gNB or a transmission point, for example, a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a BBU. The RU may be included in a radio frequency device or a radio frequency unit, for example, in a remote radio unit (remote radio unit, RRU), an active antenna unit (active antenna unit, AAU), or a remote radio head (remote radio head, RRH). Alternatively, the network device may be a server, a wearable device, a vehicle, a vehicle-mounted device, or the like. For example, the network device may be a road side unit (road side unit, RSU) in a V2X technology.

It should be noted that in different systems, the CU (or the CU-CP and the CU-UP), the DU, or the RU may have different names, but a person skilled in the art may understand meanings of the names. For example, in an open access network (open radio access network, ORAN) system, the CU may also be referred to as an open central unit (open central unit, O-CU) or an open CU, the DU may also be referred to as an open distributed unit (open distributed unit, O-DU), the central unit-control plane (central unit control plane, CU-CP) may also be referred to as an open central unit-control plane (open central unit control plane, O-CU-CP) or an open CU-CP, the central unit-user plane (central unit-user plane, CU-UP) may also be referred to as an open central unit-user plane (open central unit user plane, O-CU-UP) or an open CU-UP, and the RU may also be referred to as an open radio unit (open radio unit, O-RU). This is not specifically limited in this application. Any unit in the CU, the CU-CP, the CU-UP, the DU, and the RU in this application may be implemented by a software module, a hardware module, or a combination of the software module and the hardware module.

Optionally, for network elements in the ORAN system, each network element may implement a protocol layer function shown in Table 1.

Table 1

| ORAN network element | Protocol layer function |
| --- | --- |
| O-CU-CP | RRC and packet data convergence protocol control plane (packet data convergence protocol control plane, PDCP-C) |

(continued)

| ORAN network element | Protocol layer function |
|---|---|
| O-CU-UP | Service data adaptation protocol (service data adaptation protocol, SDAP) and packet data convergence protocol user plane (packet data convergence protocol user plane, PDCP-U) |
| O-DU | Radio link control (radio link control, RLC), MAC, and physical high layer (PHY-high) |
| O-RU | Physical lower layer (PHY-low) |

It should be noted that the network device may be one or more network elements shown in Table 1. This is not specifically limited in this application.

It should be noted that Table 1 is merely an example. During actual application, a protocol layer function supported by each network element is not limited. For example, each network element may support more protocol layer functions, or the protocol layer function supported by each network element is specifically configured based on an actual situation. This is not specifically limited in this application.

Architectures of the CU and the DU of the access network device are described below. The access network device includes at least one CU and at least one DU. Optionally, the access network device further includes at least one RU.

Descriptions are provided below by using an example in which the access network device includes one CU and one DU. The CU has some functions of a core network, and the CU may include a CU-CP and a CU-UP. The CU and the DU may be configured based on wireless network protocol layer functions implemented by the CU and the DU. For example, the CU is configured to implement functions of a PDCP layer and a protocol layer above the PDCP layer (for example, an RRC layer and/or an SDAP layer). The DU is configured to implement functions of a protocol layer below the PDCP layer (for example, an RLC layer, a MAC layer, and/or a PHY layer). For another example, the CU is configured to implement a function of a protocol layer above a PDCP layer (for example, an RRC layer and/or an SDAP layer), and the DU is configured to implement a function of the PDCP layer and a protocol layer below the PDCP layer (for example, an RLC layer, a MAC layer, and/or a PHY layer).

When the CU includes the CU-CP and the CU-UP, the CU-CP is configured to implement a control plane function of the CU, and the CU-UP is configured to implement a user plane function of the CU. For example, when the CU is configured to implement functions of the PDCP layer, the RRC layer, and the SDAP layer, the CU-CP is configured to implement the function of the RRC layer and a control plane function of the PDCP layer, and the CU-UP is configured to implement the function of the SDAP layer and a user plane function of the PDCP layer.

The CU-CP may interact with a network element that is in the core network and that is configured to implement a control plane function. The network element that is in the core network and that is configured to implement the control plane function may be an access and mobility function network element, for example, an access and mobility management function (access and mobility management function, AMF) in the 5G mobile communication system. The access and mobility function network element is configured to be responsible for mobility management in a mobile network, for example, location update of a terminal device, network registration of the terminal device, and a handover of the terminal device. The CU-UP may interact with a network element that is in the core network and that is configured to implement a user plane function. The network element that is in the core network and that is configured to implement the user plane function, for example, a user plane function (user plane function, UPF) in the 5G mobile communication system, is configured to be responsible for forwarding and receiving data in the terminal device.

The foregoing configuration of the CU and the DU is merely an example. Alternatively, functions of the CU and the DU may be configured as needed. For example, the CU or the DU may be configured to have functions of more protocol layers, or the CU or the DU may be configured to have some processing functions of protocol layers. For example, some functions of the RLC layer and functions of a protocol layer above the RLC layer are set on the CU, and remaining functions of the RLC layer and functions of a protocol layer below the RLC layer are set on the DU. For another example, functions of the CU or the DU may alternatively be divided based on a service type or another system requirement. For example, division is performed based on a delay. In this case, functions whose processing time needs to satisfy a small delay requirement are set on the DU, and functions whose processing time does not need to satisfy the delay requirement are set on the CU.

The DU and the RU may work together to implement a function of the PHY layer. One DU may be connected to one or more RUs. Functions of the DU and the RU may be configured into a plurality of manners based on a design. For example, the DU is configured to implement a baseband function, and the RU is configured to implement an intermediate radio frequency function. For another example, the DU is configured to implement a higher-layer function of the PHY layer, and the RU is configured to implement a lower-layer function of the PHY layer or implement the lower-layer function and a radio frequency function. The higher-layer function of the physical layer may include a part of functions of the physical layer, and the part of functions is closer to the MAC layer. The lower-layer function of the physical layer may include another part of functions of the physical layer, and the another part of functions is closer to an intermediate radio frequency side.

Optionally, the network device may alternatively be a core network device. The core network device is responsible for access control, registration management, service management, mobility management, and the like for the terminal device to access a network. For example, the core network device is the AMF.

It should be noted that the network device may be the device or the apparatus shown above, or may be a component (for example, a chip), a module, or a unit in the device or the apparatus shown above. This is not specifically limited in this application.

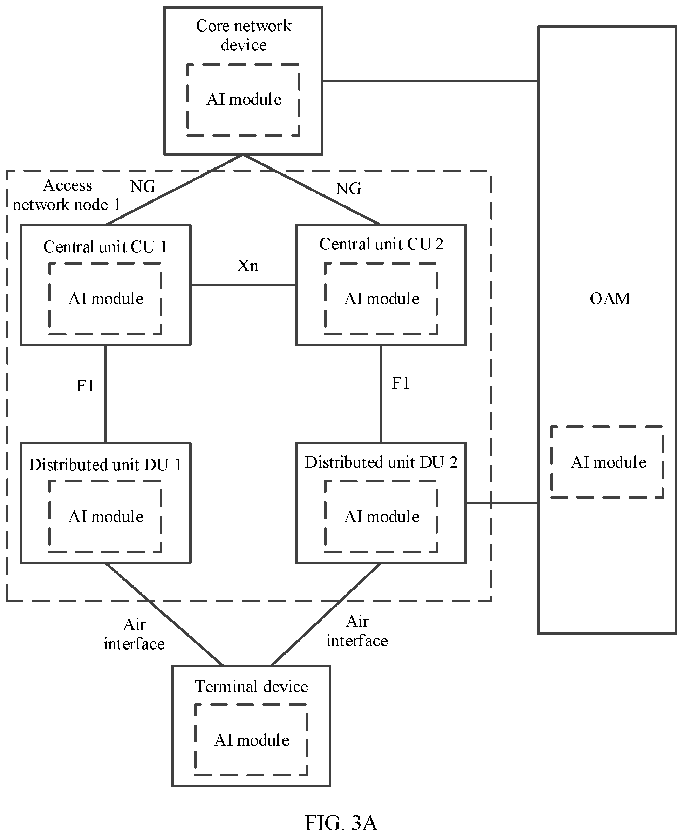

In the communication system provided in this application, an AI network element may be introduced to implement a part or all of AI-related operations. The AI network element may also be referred to as an AI node, an AI device, an AI entity, an AI module, an AI model, an AI unit, or the like. The AI network element may be built in a network element in the communication system. For example, the AI network element may be an AI module built in an access network device, a core network device, a cloud server, or operation, administration and maintenance (operation, administration and maintenance, OAM), to implement an AI-related function. The OAM may be used as operation, administration, and maintenance of the core network device and/or operation, administration, and maintenance of the access network device. Alternatively, the AI network element may be an independently disposed network element in the communication system. Optionally, the terminal device or a chip built in the terminal device may alternatively include an AI entity, configured to implement an AI-related function. With reference to FIG. 3A, the following describes another communication system provided in an embodiment of this application.

FIG. 3A is another diagram of a communication system according to an embodiment of this application. As shown in FIG. 3A, network elements in the communication system are connected to each other through an interface (for example, an NG interface or a Xn interface) or an air interface. One or more AI modules (for clarity, only one AI module is shown in FIG. 3A) are deployed on these network element nodes, for example, one or more of the following devices: a core network device, an access network node (RAN node), a terminal, and an OAM. The access network node may be used as an independent RAN node, or may include a plurality of RAN nodes, for example, include a CU and a DU. One or more AI modules may also be disposed in the CU and/or the DU. Optionally, the CU may be further split into a CU-CP and a CU-UP. One or more AI models are disposed in the CU-CP and/or the CU-UP.

The AI module is configured to implement a corresponding AI function. AI modules deployed in different network elements may be the same or different. A model of the AI module is configured based on different parameters, and the AI module may implement different functions. The model of the AI module may be configured based on one or more of the following parameters: a structure parameter (for example, at least one of a quantity of neural network layers, a width of a neural network, a connection relationship between layers, a weight of a neuron, an activation function of a neuron, or a bias in an activation function), an input parameter (for example, a type of the input parameter and/or a dimension of the input parameter), and an output parameter (for example, a type of the output parameter and/or a dimension of the output parameter). The bias in the activation function may also be referred to as a bias of the neural network.

One AI module may have one or more models. One model may obtain an output through inference, and the output includes one or more parameters. Learning processes, training processes, or inference processes of different models may be deployed in different nodes or devices, or may be deployed in a same node or device.

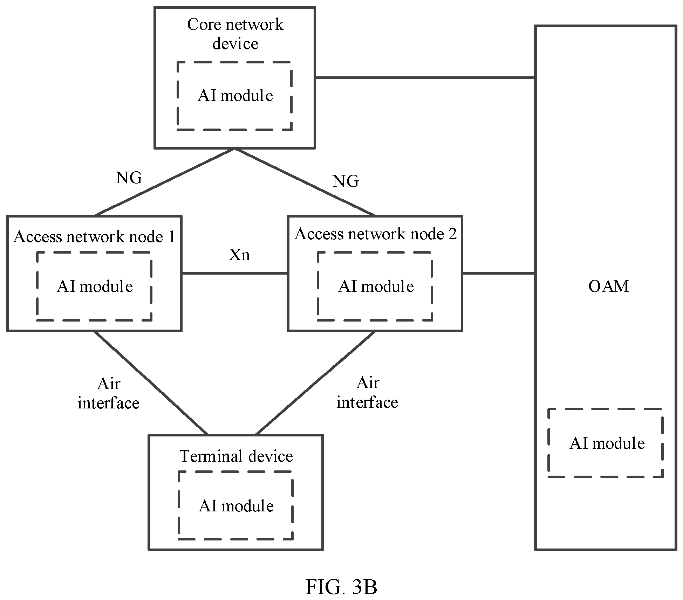

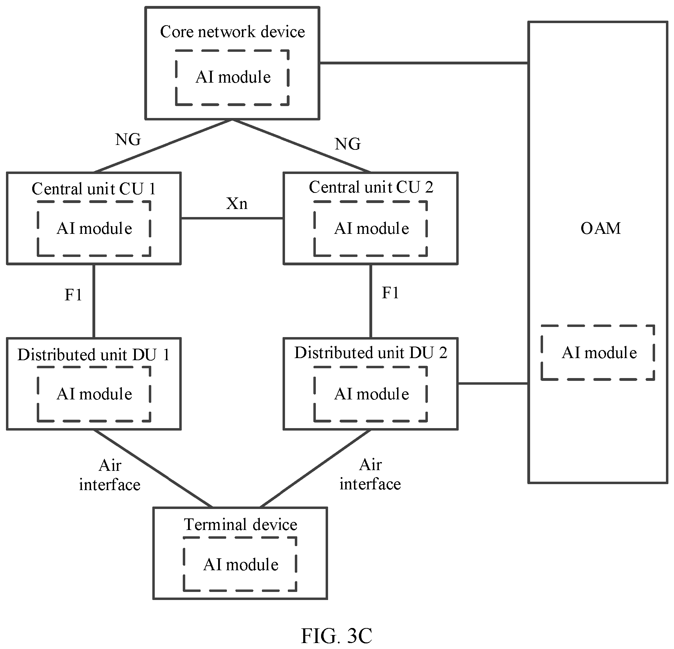

It should be noted that the access network node shown in FIG. 3A above may be used as a whole, or the access network node shown in FIG. 3A above uses an architecture in which the CU and the DU are separated. FIG. 3B is a diagram of a communication system in which an access network node is used as a whole and the access network node is connected to a terminal device. FIG. 3C is a diagram of a communication system in which an access network node uses an architecture in which a CU and a DU are separated.

As shown in FIG. 1, a transmitter and a receiver may communicate with each other through an air interface. The transmitter and the receiver may be implemented based on neural networks. Currently, better transmitting performance of a neural network of the transmitter can be implemented through data training, and better receiving performance of a neural network of the receiver can be implemented through data training.

The transmitter and the receiver are trained for a radio environment. Specifically, training data related to the radio environment is collected between the transmitter and the receiver through air interface data transmission, and a transmitter/receiver neural network is trained based on the training data. Then, a channel parameter (for example, channel distribution) in the radio environment usually changes slowly. Therefore, training data collected by the transmitter and the receiver in a short time usually has a strong correlation, and is not conducive to training of the transmitter/receiver neural network. Consequently, a training speed and training performance of the transmitter/receiver neural network are reduced.

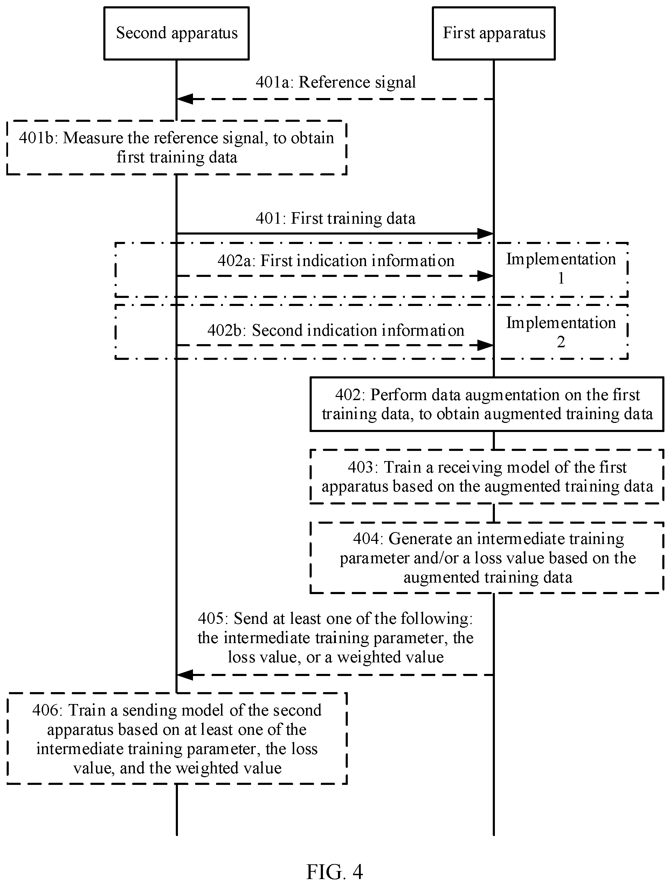

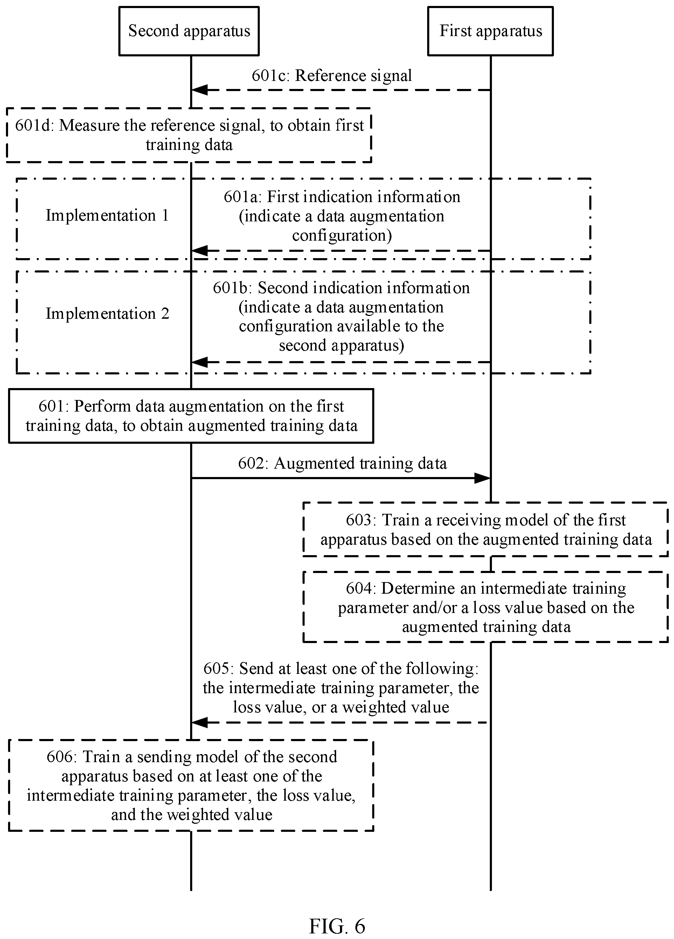

This application provides a data processing method and a related apparatus, to help train a transmitter/receiver model (for example, a transmitter/receiver neural network), and improve a training speed and training performance of the transmitter/receiver model. For details, refer to related descriptions of embodiments shown in FIG. 4 and FIG. 6 below.

The following describes the technical solutions of this application with reference to specific embodiments.

In the following embodiments, a first apparatus has a receiver, and a second apparatus has a transmitter. Optionally, the receiver is implemented by using a receiving model, and the receiving model is configured to receive data and/or information. The receiving model may be a receiving neural network or another AI model. This is not specifically limited in this application. Optionally, the transmitter is implemented by using a sending model, and the sending model is configured to send data and/or information. The sending model may be a sending neural network or another AI model. This is not specifically limited in this application. In the embodiment shown in FIG. 4, a second apparatus sends first training data, and a first apparatus performs data augmentation on the received first training data. In the embodiment shown in FIG. 6, a second apparatus performs data augmentation on first training data, to obtain augmented training data, and then sends the augmented training data to a first apparatus.

FIG. 4 is a diagram of an embodiment of a data processing method according to an embodiment of this application. Refer to FIG. 4. The method includes the following steps.

401: The second apparatus sends the first training data to the first apparatus. Correspondingly, the first apparatus receives the first training data from the second apparatus.

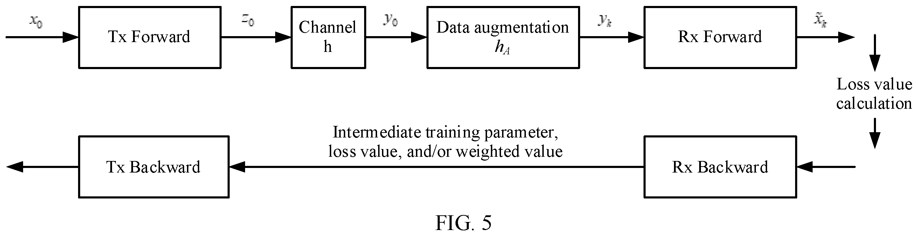

For example, as shown in FIG. 5, the second apparatus processes the first training data $x_0$ by using a sending model, to obtain to-be-sent data $z_0$. The to-be-sent data $z_0 = f(x_0; \omega_{tx})$, where $\omega_{tx}$ is a weight parameter of the sending model, $f(x_0; \omega_{tx})$ is a signal obtained by processing $x_0$ by using a neural network that uses $\omega_{tx}$, that is, a signal output by the second apparatus through the sending model.

Optionally, the first training data may be a preset bit or sample data in a training set. Alternatively, the first training data is channel data between the first apparatus and the second apparatus. Optionally, the embodiment shown in FIG. 4 further includes step 401a and step 401b. Step 401a and step 401b may be performed before step 401.

401a: The first apparatus sends a reference signal to the second apparatus. Correspondingly, the second apparatus receives the reference signal from the first apparatus.

For example, the first apparatus is a network device, and the second apparatus is a terminal device. The reference signal is a channel state information reference signal (channel state information reference signal, CSI-RS) or a demodulation reference signal (demodulation reference signal, DMRS).

For another example, the first apparatus is a terminal device, and the second apparatus is a network device. The reference signal is a sounding reference signal (sounding reference signal, SRS).

For another example, the first apparatus is a first terminal device, and the second apparatus is a second terminal device. The reference signal is a reference signal on a sidelink.

401b: The second apparatus measures the reference signal, to obtain the first training data.

Specifically, the second apparatus measures the reference signal, to obtain the channel data between the first apparatus and the second apparatus. The channel data may be used as the first training data.

402: The first apparatus performs data augmentation on the first training data, to obtain augmented training data.

For example, as shown in FIG. 5, the second apparatus processes the first training data $x_0$ by using the sending model, to obtain the to-be-sent data $z_0$. The to-be-sent data $z_0$ is transmitted to the first apparatus through a channel h, and data received by the first apparatus is $y_0$. $y_0 = h(z_0) + n_0$, where $n_0$ is channel noise. The first apparatus performs data augmentation on the data $y_0$, $y_k$. $y_k = h_A(y_0; \varepsilon_k)$, where k=1, 2, ..., K. K is a quantity of augmented samples, that is, an amount of data augmentation, and $\varepsilon_k$ indicates a data augmentation configuration of augmented sample data k.

It should be noted that, optionally, the augmented training data includes training data obtained through augmentation and the first training data. In other words, the first apparatus performs data augmentation on the first training data, to obtain a larger amount of training data and more diversified training data.

Optionally, the first apparatus performs data augmentation on the first training data based on the data augmentation configuration, to obtain the augmented training data.

Optionally, the data augmentation configuration includes at least one of the following: a data augmentation method, a data augmentation parameter, or a quantity of augmented samples.

The data augmentation method includes at least one of the following: noise addition, signal phase rotation, signal random phase processing, channel simulation processing, or signal rearrangement. The foregoing is merely an example, and is also applicable to another data augmentation method in this application. This is not specifically limited in this application.

The data augmentation parameter includes at least one of the following: noise power, a signal phase rotation angle, distribution or a range of random phases used for the signal random phase processing, a ratio of amplitudes of elements of a diagonal matrix used for the channel simulation processing, or a rearrangement unit of a signal in time domain and/or frequency domain.

Optionally, the noise power may belong to an interval. In other words, the first apparatus may select a value of the noise power in the interval. The signal phase rotation angle may include one or more angles, that is, a discrete interval. For example, $\phi_k \in \{\pi * i / 4\}$, where i=1, 2, ..., and K. K is the quantity of augmented samples, that is, the amount of data augmentation. In other words, the signal phase rotation angle may be a value in the discrete interval. The distribution or the range of random phases used for the signal random phase processing may be represented by using an interval. For

example, $\varphi_k \in [0, 2\pi]$. In other words, the random phase may be a value in this interval. Specifically, $\varphi_k$ is obtained through sampling based on uniform distribution of $[0, 2\pi]$. Optionally, the diagonal matrix used for the channel simulation processing may be a multiple-input multiple-output (multiple-in multiple-out, MIMO) diagonal matrix, and a correlation matrix of the channel is not changed.

The rearrangement unit of the signal in the time domain may be a time domain symbol, a slot, a subframe, a frame, or the like. This is not specifically limited in this application. The rearrangement unit of the signal in the frequency domain may be a resource element (resource element, RE), a resource block (resource block, RB), or the like. This is not specifically limited in this application.

The quantity of augmented samples is a quantity of augmented samples obtained by performing data augmentation on the first training data.

It should be noted that, if the data augmentation method is the noise addition, the data augmentation parameter may include the noise power. If the data augmentation method is the signal random phase processing, the data augmentation parameter may include the signal phase rotation angle. If the data augmentation method is the signal random phase processing, the data augmentation parameter may include the distribution or the range of random phases used for the random signal phase processing. If the data augmentation method is the channel simulation processing, the data augmentation parameter may include the ratio of the amplitudes of the elements of the diagonal matrix used for the channel simulation processing. If the data augmentation method is the signal rearrangement, the data augmentation parameter may include the rearrangement unit of the signal in time domain and/or frequency domain.

The following first describes each data augmentation method.

1. Noise addition.

The first apparatus determines, based on the data augmentation configuration, to use the data augmentation method of noise addition. Then, the first apparatus performs, based on the data augmentation parameter and the augmented sample data, noise addition processing on the first training data received by the first apparatus, to obtain the augmented training data. For example, as shown in FIG. 5, the first apparatus performs noise addition processing on the first training data $y_0$ received by the first apparatus, to obtain augmented training data $y_k = y_0 + n_k$, where $n_k$ is noise power, that is, the data augmentation parameter. A value of $n_k$ may be in the interval to which the noise power indicated in the data augmentation configuration belongs. A value of k may be 1, 2, 3, ..., or K. K is the quantity of augmented samples. Therefore, the first apparatus may perform noise addition processing on the first training data received by the first apparatus, to obtain K pieces of augmented sample data.

2. Signal phase rotation.

The first apparatus determines, based on the data augmentation configuration, to use the data augmentation method of signal phase rotation. Then, the first apparatus performs, based on the data augmentation parameter and the augmented sample data, signal phase rotation on the first training data received by the first apparatus, to obtain the augmented training data. For example, the first training data received by the first apparatus is represented as $y_a$, apparatus performs channel equalization processing on the first training data $y_a$ received by the first apparatus, to obtain $y_b$. $y_k = y_b *\phi_k$, where $\phi_k$ is a signal phase rotation angle, that is, the data augmentation parameter. $\phi_k \in \{\pi * i / 4\}$, where a value of i may be 1, 2, 3, ..., or K. K is the quantity of augmented samples. Therefore, the first apparatus may perform signal phase rotation on the first training data received by the first apparatus, to obtain the K pieces of augmented sample data.

3. Signal random phase processing.

The first apparatus determines, based on the data augmentation configuration, to use the data augmentation method of signal random phase processing. Then, the first apparatus performs, based on the data augmentation parameter and the augmented sample data, signal random phase processing on the first training data received by the first apparatus, to obtain the augmented training data. For example, as shown in FIG. 5, the first apparatus performs signal random phase processing on the first training data $y_0$ received by the first apparatus, to obtain the augmented training data $y_k = y_0 * \varphi_k$. For example, $\varphi_k \in [0, 2\pi]$. In other words, the random phase may be obtained from the interval. Specifically, $\varphi_k$ is obtained through sampling based on uniform distribution of $[0, 2\pi]$. In other words, $\varphi_k$ is the data augmentation parameter. A value of k may be 1, 2, 3, ..., or K. K is the quantity of augmented samples. Therefore, the first apparatus may perform signal random phase processing on the first training data received by the first apparatus, to obtain the K pieces of augmented sample data.

4. Channel simulation processing.

The first apparatus determines, based on the data augmentation configuration, to use the data augmentation method of channel simulation processing. Then, the first apparatus performs, based on the data augmentation parameter and the augmented sample data, channel simulation processing on the first training data, to obtain the augmented training data. For example, as shown in FIG. 5, the first apparatus performs channel simulation processing on the first training data $y_0$ received by the first apparatus, to obtain the augmented training data $y_k = y_0 {}^* h_k$, $h_k$ is a data augmentation parameter, and $h_k$ represents a diagonal matrix. A value of k may be 1, 2, 3, ..., or K. K is the quantity of augmented samples. Therefore, the first apparatus may perform channel simulation processing on the first training data received by the first apparatus, to obtain the K pieces of augmented sample data.

5. Signal rearrangement.

The first apparatus rearranges, based on a rearrangement unit of a signal in time domain and/or frequency domain, the first training data received by the first apparatus, to obtain the augmented training data. In other words, a minimum unit in which the first apparatus rearranges the first training data received by the first apparatus needs to be greater than or equal to a minimum unit in which the second apparatus sends the first training data, and training data in different rearrangement units after the rearrangement may be independently processed. For example, the second apparatus sends the first training data in frequency domain at a granularity of an RB. In this case, the first apparatus needs to rearrange, by using the RB as a rearrangement unit, the first training data received by the first apparatus, to obtain the augmented training data.

It should be noted that the three data augmentation methods, namely, signal phase rotation, signal rearrangement, and channel simulation processing, are related to a signal feature and/or a sending manner of a signal sent by the second apparatus. Therefore, the second apparatus needs to indicate a corresponding data augmentation method and/or data augmentation parameter to the first apparatus. For example, for signal phase rotation, a signal sent by the second apparatus is required to have a phase rotation feature, another signal obtained through signal rotation is still a valid signal, and the valid signal may be understood as a signal that can be sent by the second apparatus. For example, the second apparatus sends a signal in a binary phase shift keying (binary phase shift keying, BPSK) modulation manner, and the first apparatus performs phase rotation on the signal to obtain another signal. The another signal needs to be a signal that can be generated and sent by the second apparatus in the BPSK modulation manner. For another example, channel simulation processing is related to a sending manner in which the second apparatus sends a signal, and the sending manner is related to a training task. For example, the second apparatus jointly sends the first training data through a plurality of antennas. The first apparatus may perform, by using a MIMO diagonal array, channel simulation processing on the first training data received by the first apparatus.

It should be noted that, for the first training data, the first apparatus may perform data augmentation on the first training data according to one or more data augmentation methods. This is not specifically limited in this application.

Optionally, the data augmentation configuration is determined based on a configuration of a receiving model of the first apparatus, a configuration of a sending model of the second apparatus, and/or a change speed of a channel between the first apparatus and the second apparatus.

Optionally, the configuration of the receiving model of the first apparatus includes at least one of the following: a model structure, a model size, or a model parameter quantity of the receiving model. Optionally, the configuration of the receiving model of the first apparatus may be determined based on a to-be-executed task of the first apparatus and/or a capability of the first apparatus.

Optionally, the configuration of the sending model of the second apparatus includes at least one of the following: a model structure, a model size, or a model parameter quantity of the sending model. Optionally, the configuration of the sending model of the second apparatus may be determined based on a to-be-executed task of the second apparatus and/or a capability of the second apparatus.

For example, a model scale of the receiving model is large, and a model scale of the sending model is small. A quantity of update rounds required by the receiving model is greater than a quantity of update rounds required by the sending model, and a quantity of augmented samples may be N times a quantity of data samples included in the first training data. N is equal to a ratio of the quantity of update rounds required by the receiving model to the quantity of update rounds required by the sending model.

For another example, the channel between the first apparatus and the second apparatus changes slowly, and the quantity of augmented samples may be large, so that the first apparatus obtains more training data, and improves a training speed and performance of the model.

Optionally, the data augmentation configuration is pre-agreed between the first apparatus and the second apparatus, or is specified in a communication protocol, or is selected by the first apparatus. This is not specifically limited in this application. The following describes two possible implementations. This application is also applicable to another implementation. This is not specifically limited in this application.

The following describes an implementation 1 with reference to step 402a. Optionally, the embodiment shown in FIG. 4 further includes step 402a. Step 402a may be performed before step 402.

402a: The second apparatus sends first indication information to the first apparatus. Correspondingly, the first apparatus receives the first indication information from the second apparatus.

The first indication information indicates the data augmentation configuration. The data augmentation configuration is used to perform data augmentation on the first training data. For the data augmentation configuration, refer to the foregoing related descriptions. Optionally, that the first apparatus obtains the data augmentation configuration includes: The first apparatus receives the first indication information from the second apparatus. It should be noted that there is no fixed execution sequence between step 402a and step 401. Step 402a may be performed before step 401; step 401 may be performed before step 402a; or step 401 and step 402a may be simultaneously performed based on a case. This is not specifically limited in this application.

The following describes an implementation 2 with reference to step 402b. Optionally, the embodiment shown in FIG. 4 further includes step 402b. Step 402b may be performed before step 402.

402b: The second apparatus sends second indication information to the first apparatus. Correspondingly, the first apparatus receives the second indication information from the second apparatus.

The second indication information indicates a data augmentation configuration available to the first apparatus. Optionally, the second indication information further indicates a priority of the available data augmentation configuration. Optionally, that the first apparatus obtains the data augmentation configuration includes: The first apparatus receives the second indication information from the second apparatus; and the first apparatus determines the data augmentation configuration based on the data augmentation configuration that is available to the first apparatus and that is indicated by the second indication information.

In this implementation, the second apparatus provides the available data augmentation configuration for the first apparatus. The first apparatus may select, from the available data augmentation configuration, the data augmentation configuration used to perform data augmentation on the first training data. For example, the first apparatus may select a data augmentation configuration with a higher priority or a highest priority as the data augmentation configuration used to perform data augmentation on the first training data received by the first apparatus. Then, the first apparatus performs, based on the selected data augmentation configuration, data augmentation on the first training data received by the first apparatus, to obtain the augmented training data. Alternatively, the first apparatus may determine the data augmentation configuration based on the data augmentation configuration that is available to the first apparatus and that is indicated by the second indication information. Then, the first apparatus performs, based on the determined data augmentation configuration, data augmentation on the first training data received by the first apparatus, to obtain the augmented training data.

Optionally, the embodiment shown in FIG. 4 further includes step 403. Step 403 may be performed after step 402.

403: The first apparatus trains a receiving model of the first apparatus based on the augmented training data.

For example, as shown in FIG. 5, the augmented training data is represented as $y_k$, and the receiving model is a receiving neural network. The first apparatus processes the augmented training data by using the receiving neural network, to obtain $\tilde{x}_k = f y_k; \omega_{rx})$, where $f(y_k; \omega_{rx})$ is a signal obtained by processing $y_k$ by using a neural network that uses $\omega_{rx}$, that is, a signal output by the receiving model of the first apparatus. The first apparatus calculates a loss value

$$l_k = dist(\tilde{x}_k, x_0^{(k)})$$ according to a loss function. The first apparatus learns in advance that the first training data sent by the second apparatus is $x_0$, and $x_0^{(k)}$ is obtained by the first apparatus by performing data augmentation on the first training data $x_0$ based on the data augmentation configuration. The first apparatus may obtain a weight gradient

$$\Delta\omega_{rx} = 1/K \sum_{k=1}^{K} g_k = 1/K \sum_{k=1}^{K} \frac{\partial l_k}{\partial \omega_{rx}}$$ of the receiving neural network through calculation. K is the quantity of augmented samples. The first apparatus may update the receiving neural network based on the weight gradient.

Optionally, in step 403, the augmented training data includes a plurality of pieces of augmented sample data. The first apparatus trains the receiving model based on a part or all of the plurality of pieces of augmented sample data. For example, the first apparatus performs data augmentation on the first training data, to obtain augmented sample data with different signal-to-noise ratios. The first apparatus selects, from the augmented sample data with different signal-to-noise ratios, a part of augmented sample data whose signal-to-noise ratio falls within a signal-to-noise ratio range of training data of the receiving model, and trains the receiving model based on the part of augmented sample data.

Optionally, the embodiment shown in FIG. 4 further includes step 404 and step 405. Step 404 and step 405 may be performed after step 402.

404: The first apparatus generates an intermediate training parameter and/or a loss value based on the augmented training data.

Optionally, the intermediate training parameter is an intermediate gradient.

For example, as shown in FIG. 5, the first apparatus processes the augmented training data by using the receiving neural network, to obtain $\tilde{x}_k = f(y_k; \omega_{rx})$. For a $k^{th}$ piece of augmented sample data, the first apparatus calculates a loss value $l_k = dist(\tilde{x}_k, x_0^{(k)})$ according to a loss function. The augmented training data includes K pieces of augmented sample data, and for the $k^{th}$ piece of augmented sample data, an intermediate gradient is $\dfrac{\partial l_k}{\partial y_0}$. A merged intermediate gradient may be represented as $\dfrac{\partial l}{\partial z} = \dfrac{1}{K} \sum_{k=1}^{K} \dfrac{\partial l_k}{\partial y_0}$.

It should be noted that the first apparatus may generate at least one intermediate training parameter and/or at least one loss value based on the augmented training data. For example, the augmented training data includes K pieces of augmented sample data, and each piece of augmented sample data corresponds to one intermediate training parameter and/or one loss value. Therefore, the first apparatus may generate K intermediate training parameters and/or K loss values based on the K pieces of augmented sample data.

405: The first apparatus sends, to the second apparatus, at least one of the following: the intermediate training parameter, the loss value, or a weighted value.

The weighted value is determined based on the intermediate training parameter or the loss value. For example, the augmented training data includes K pieces of augmented sample data, and the first apparatus may generate K intermediate training parameters and/or K loss values. The weighted value may be obtained by performing weighted processing on a part or all of the K intermediate training parameters. For example, the K intermediate training parameters include K intermediate gradients. The weighted value is an average value of the K intermediate gradients. Alternatively, the weighted value may be obtained by performing weighted processing on a part or all of the K loss values. For example, the weighted value is an average value of the K loss values.

Optionally, the first apparatus generates K intermediate training parameters and/or K loss values. In step 405, the first apparatus sends a part or all of the K intermediate training parameters and/or a part or all of the K loss values to the second apparatus.

Optionally, the second apparatus sends third indication information to the first apparatus. The third indication information indicates a condition that needs to be met by each of the part of intermediate training parameters, the part of loss values, or the weighted value.

The augmented training data includes a plurality of pieces of augmented sample data. The part of intermediate training parameters, the part of loss values, and the weighted value are all determined based on a part of the plurality of pieces of augmented sample data. In a possible implementation, the second apparatus sends the first training data. The first apparatus receives the first training data, and performs data augmentation on the first training data, to obtain augmented sample data with different signal-to-noise ratios. The first apparatus selects, from the augmented sample data with the different signal-to-noise ratios, a part of augmented sample data whose signal-to-noise ratio falls within a signal-to-noise ratio range of training data of the sending model. Then, the first apparatus generates the part of intermediate training parameters, the part of loss values, and/or the weighted value based on the part of augmented sample data. The first apparatus feeds back the part of intermediate training parameters, the part of loss values, and/or the weighted value to the second apparatus.

Optionally, the third indication information is carried in the data augmentation configuration.

It should be noted that there is no fixed execution sequence between step 403 and step 404 and step 405. Step 403 may be performed before step 404 and step 405; or step 404 and step 405 are performed before step 403; or step 403 and step 404 and step 405 are simultaneously performed based on a case. This is not specifically limited in this application.

Optionally, the embodiment shown in FIG. 4 further includes step 406. Step 406 may be performed after step 405.

406: The second apparatus trains the sending model of the second apparatus based on at least one of the intermediate training parameter, the loss value, and the weighted value.

For the sending model, refer to the foregoing related descriptions. Details are not described herein again.

For example, as shown in FIG. 5, for the $k^{th}$ piece of augmented sample data, the intermediate gradient is $\dfrac{\partial l_k}{\partial y_0}$. The sending model is a sending neural network, and a gradient of a weight parameter $\omega_{tx}$ of the sending neural network is $\dfrac{\partial l_k}{\partial \omega_{tx}} = \dfrac{\partial l_k}{\partial y_0} \dfrac{\partial y_0}{\partial \omega_{tx}}$. Then, the second apparatus updates the weight parameter of the sending neural network based on the gradient.

In this embodiment of this application, the first apparatus receives the first training data from the second apparatus. Then, the first apparatus performs data augmentation on the first training data, to obtain the augmented training data. It can be learned that the first apparatus may perform data augmentation on the first training data, to improve an amount and diversity of training data, facilitate training of a transmitter/receiver model (for example, a transmitter/receiver neural network), and improve a training speed and training performance of the transmitter/receiver model. For example, the first apparatus may train a receiving model of the first apparatus based on the augmented training data, to improve a training speed and training performance of the receiving model.

FIG. 6 is a diagram of another embodiment of a data processing method according to an embodiment of this application. Refer to FIG. 6. The method includes the following steps.

601: The second apparatus performs data augmentation on the first training data, to obtain the augmented training data.

Step 601 is similar to step 402 in the embodiment shown in FIG. 4. For details, refer to related descriptions of step 402 in the embodiment shown in FIG. 4. Details are not described herein again. It should be noted that, optionally, the augmented training data includes training data obtained through augmentation and the first training data.

Optionally, the second apparatus performs data augmentation on the first training data based on a data augmentation configuration, to obtain the augmented training data. For the data augmentation configuration, refer to related descriptions in step 402 in the embodiment shown in FIG. 4. Details are not described herein again.

Optionally, the data augmentation configuration is pre-agreed between the first apparatus and the second apparatus, or is specified in a communication protocol, or is selected by the second apparatus. This is not specifically limited in this application. The following describes two possible implementations. This application is also applicable to another implementation. This is not specifically limited in this application.

The following describes an implementation 1 with reference to step 601a. Optionally, the embodiment shown in FIG. 6 further includes step 601a. Step 601a may be performed before step 601.

601a: The first apparatus sends first indication information to the second apparatus. The first indication information indicates the data augmentation configuration. Correspondingly, the second apparatus receives the first indication information from the first apparatus.

The data augmentation configuration is used to perform data augmentation on the first training data. Optionally, that the second apparatus obtains the data augmentation configuration includes: The second apparatus receives the first indication information from the first apparatus.

The following describes an implementation 2 with reference to step 601b. Optionally, the embodiment shown in FIG. 6 further includes step 601b. Step 601b may be performed before step 601.

601b: The first apparatus sends second indication information to the second apparatus. The second indication information indicates a data augmentation configuration available to the second apparatus. Correspondingly, the second apparatus receives the second indication information from the first apparatus.

Optionally, the second indication information further indicates a priority of the available data augmentation configuration.

Optionally, that the second apparatus obtains the data augmentation configuration includes: The second apparatus receives the second indication information from the first apparatus; and the second apparatus determines the data augmentation configuration based on the data augmentation configuration that is available to the second apparatus and that is indicated by the second indication information.

In this implementation, the first apparatus provides the available data augmentation configuration for the second apparatus. The second apparatus may select, from the available data augmentation configuration, the data augmentation configuration used to perform data augmentation on the first training data. For example, the second apparatus may select a data augmentation configuration with a higher priority or a highest priority. Then, the second apparatus performs data augmentation on the first training data based on the selected data augmentation configuration, to obtain the augmented training data. Alternatively, the second apparatus may determine the data augmentation configuration based on the data augmentation configuration that is available to the second apparatus and that is indicated by the second indication information. Then, the second apparatus performs, based on the determined data augmentation configuration, data augmentation on the first training data received by the second apparatus, to obtain the augmented training data.

Optionally, the first training data is channel data between the first apparatus and the second apparatus. Optionally, the embodiment shown in FIG. 6 further includes step 601c and step 601d. Step 601c and step 601d may be performed before step 601.

601c: The first apparatus sends a reference signal to the second apparatus. Correspondingly, the second apparatus receives the reference signal from the first apparatus.

601d: The second apparatus measures the reference signal, to obtain the first training data.

Step 601c and step 601d are similar to step 401a and step 401b in the embodiment shown in FIG. 4. For details, refer to related descriptions of step 401a and step 401b in the embodiment shown in FIG. 4. Details are not described herein again.

It should be noted that there is no fixed execution sequence between step 601c and step 601d and step 601a and step 601b. Step 601c and step 601d may be performed before step 601a or step 601b; or step 601a or step 601b may be performed before step 601c and step 601d; or step 601c and step 601d and step 601a, or step 601c and step 601d and step 601 are simultaneously performed based on a case. This is not specifically limited in this application.

602: The second apparatus sends the augmented training data to the first apparatus. Correspondingly, the first apparatus receives the augmented training data from the second apparatus.

Optionally, the embodiment shown in FIG. 6 further includes step 603. Step 603 may be performed after step 602.

603: The first apparatus trains a receiving model of the first apparatus based on the augmented training data.

Step 603 is similar to step 403 in the embodiment shown in FIG. 4. For details, refer to related descriptions of step 403 in the embodiment shown in FIG. 4. Details are not described herein again.

Optionally, the embodiment shown in FIG. 6 further includes step 604 and step 605. Step 604 and step 605 may be performed after step 602.

604: The first apparatus determines an intermediate training parameter and/or a loss value based on the augmented training data.

605: The first apparatus sends, to the second apparatus, at least one of the following: the intermediate training parameter, the loss value, or a weighted value. Correspondingly, the second apparatus receives, from the first apparatus, at least one of the following: the intermediate training parameter, the loss value, or the weighted value.

Step 604 and step 605 are similar to step 404 and step 405 in the embodiment shown in FIG. 4. For details, refer to related descriptions of step 404 and step 405 in the embodiment shown in FIG. 4. Details are not described herein again.

It should be noted that there is no fixed execution sequence between step 604 and step 605 and step 603. Step 603 may be performed before step 604 and step 605; or step 604 and step 605 may be performed before step 603; or step 604 and step 605 and step 603 are simultaneously performed based on a case. This is not specifically limited in this application.

Optionally, the first apparatus generates K intermediate training parameters and/or K loss values. In step 605, the first apparatus sends a part or all of the K intermediate training parameters and/or a part or all of the K loss values to the second apparatus.

Optionally, the second apparatus sends third indication information to the first apparatus. The third indication information indicates a condition that needs to be met by each of the part of intermediate training parameters, the part of loss values, or the weighted value.

Specifically, the augmented training data includes a plurality of pieces of augmented sample data. A signal-to-noise ratio range used by the second apparatus to send the plurality of pieces of augmented sample data covers a signal-to-noise ratio range of training data of a receiving model. The first apparatus selects, from the plurality of pieces of augmented sample data, a part of augmented sample data whose signal-to-noise ratio falls within a signal-to-noise ratio range of training data of a sending model, and generates the part of intermediate training parameters, the part of loss values, and/or weighted value based on the part of sample data. The first apparatus feeds back the part of intermediate training parameters, the part of loss values, and/or the weighted value to the second apparatus.

Optionally, the embodiment shown in FIG. 6 further includes step 606. Step 606 may be performed after step 605.

606: The second apparatus trains the sending model of the second apparatus based on at least one of the intermediate training parameter, the loss value, and the weighted value.

Step 606 is similar to step 406 in the embodiment shown in FIG. 4. For details, refer to related descriptions of step 406 in the embodiment shown in FIG. 4. Details are not described herein again.

In this embodiment of this application, the first apparatus receives the augmented training data from the second apparatus. The augmented training data is obtained by performing data augmentation on the first training data. It can be learned that the first apparatus can obtain a larger amount of training data and more diversified training data, to facilitate training of a transmitter/receiver model (for example, a transmitter/receiver neural network), and improve a training speed and training performance of the transmitter/receiver model. For example, the first apparatus may train a receiving model of the first apparatus based on the augmented training data, to improve a training speed and training performance of the receiving model.

The following describes a first apparatus and a second apparatus provided in embodiments of this application.

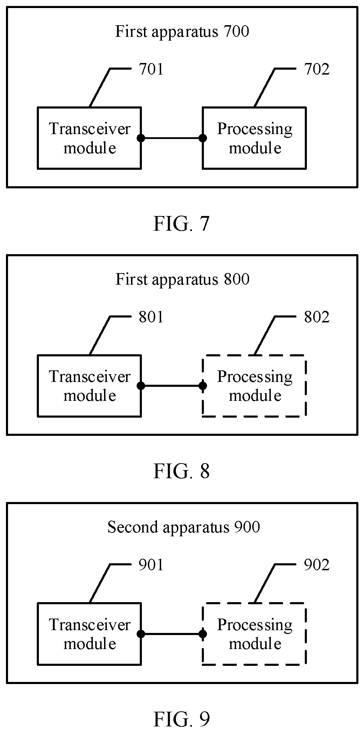

FIG. 7 is a diagram of a structure of a first apparatus according to an embodiment of this application. Refer to FIG. 7. The first apparatus may be configured to perform a process performed by the first apparatus in the embodiment shown in FIG. 4. For details, refer to related descriptions in the foregoing method embodiments.

The first apparatus 700 includes a transceiver module 701 and a processing module 702.

The processing module 702 is configured to perform data processing. The transceiver module 701 may implement a corresponding communication function. The transceiver module 701 may also be referred to as a communication interface or a communication module.

Optionally, the first apparatus 700 may further include a storage module. The storage module may be configured to store instructions and/or data. The processing module 702 may read the instructions and/or the data in the storage module, to enable the first apparatus to implement the foregoing method embodiments.

The first apparatus 700 may be configured to perform an action performed by the first apparatus in the foregoing method embodiments. The first apparatus 700 may be a first apparatus or a component that may be configured in a first apparatus. The processing module 702 is configured to perform a processing-related operation on a first apparatus side in the foregoing method embodiments. The transceiver module 701 is configured to perform a receiving-related operation on the first apparatus side in the foregoing method embodiments.

Optionally, the transceiver module 701 may include a sending module and a receiving module. The sending module is configured to perform a sending operation in the foregoing method embodiments. The receiving module is configured to perform a receiving operation in the foregoing method embodiments.

It should be noted that the first apparatus 700 may include the sending module, but does not include the receiving module. Alternatively, the first apparatus 700 may include the receiving module, but does not include the sending module. Specifically, this may depend on whether the foregoing solution performed by the first apparatus 700 includes a sending action and a receiving action.

Optionally, the first apparatus 700 is configured to perform an action performed by the first apparatus in the embodiment shown in FIG. 4. For details, refer to the related descriptions in the embodiment shown in FIG. 4. Details are not described herein again. For example, the first apparatus 700 is configured to perform the following solution.

The transceiver module 701 is configured to receive first training data from a second apparatus.

The processing module 702 is configured to perform data augmentation on first training data, to obtain augmented training data.

For other implementations, refer to the detailed descriptions of the embodiment shown in FIG. 4. Details are not described herein again.

It should be understood that a specific process in which the modules perform the foregoing corresponding process has been described in detail in the foregoing method embodiment. For brevity, details are not described herein again.

The processing module 702 in the foregoing embodiment may be implemented by at least one processor or a processor-related circuit. The transceiver module 701 may be implemented by a transceiver or a transceiver-related circuit. The transceiver module 701 may also be referred to as a communication module or a communication interface. The storage module may be implemented by at least one memory.

FIG. 8 is a diagram of another structure of a first apparatus according to an embodiment of this application. Refer to FIG. 8. The first apparatus may be configured to perform a process performed by the first apparatus in the embodiment shown in FIG. 6. For details, refer to related descriptions in the foregoing method embodiments.

The first apparatus 800 includes a transceiver module 801. Optionally, the first apparatus 800 further includes a processing module 802.

The processing module 802 is configured to perform data processing. The transceiver module 801 may implement a corresponding communication function. The transceiver module 801 may also be referred to as a communication interface or a communication module.

Optionally, the first apparatus 800 may further include a storage module. The storage module may be configured to store instructions and/or data. The processing module 802 may read the instructions and/or the data in the storage module, to enable the first apparatus to implement the foregoing method embodiments.

The first apparatus 800 may be configured to perform an action performed by the first apparatus in the foregoing method embodiments. The first apparatus 800 may be a first apparatus or a component that may be configured in a first apparatus. The processing module 802 is configured to perform a processing-related operation on a first apparatus side in the foregoing method embodiments. The transceiver module 801 is configured to perform a receiving-related operation on the first apparatus side in the foregoing method embodiments.

Optionally, the transceiver module 801 may include a sending module and a receiving module. The sending module is configured to perform a sending operation in the foregoing method embodiments. The receiving module is configured to perform a receiving operation in the foregoing method embodiments.

It should be noted that the first apparatus 800 may include the sending module, but does not include the receiving module. Alternatively, the first apparatus 800 may include the receiving module, but does not include the sending module. Specifically, this may depend on whether the foregoing solution performed by the first apparatus 800 includes a sending action and a receiving action.

Optionally, the first apparatus 800 is configured to perform an action performed by the first apparatus in the embodiment shown in FIG. 6. For details, refer to the related descriptions in the embodiment shown in FIG. 6. Details are not described herein again. For example, the first apparatus 800 is configured to perform the following solution.

The transceiver module 801 is configured to receive augmented training data from a second apparatus, where the augmented training data is obtained by performing data augmentation on first training data.

For other implementations, refer to the detailed descriptions of the embodiment shown in FIG. 6. Details are not described herein again.

It should be understood that a specific process in which the modules perform the foregoing corresponding process has been described in detail in the foregoing method embodiment. For brevity, details are not described herein again.

The processing module 802 in the foregoing embodiment may be implemented by at least one processor or processor-related circuit. The transceiver module 801 may be implemented by a transceiver or a transceiver-related circuit. The transceiver module 801 may also be referred to as a communication module or a communication interface. The storage module may be implemented by at least one memory.

FIG. 9 is a diagram of a structure of a second apparatus according to an embodiment of this application. Refer to FIG. 9. The second apparatus may be configured to perform a process performed by the second apparatus in the embodiment shown in FIG. 4. For details, refer to related descriptions in the foregoing method embodiments.

The second apparatus 900 includes a transceiver module 901. Optionally, the second apparatus 900 further includes a processing module 902.

The processing module 902 is configured to perform data processing. The transceiver module 901 may implement a corresponding communication function. The transceiver module 901 may also be referred to as a communication interface or a communication module.

Optionally, the second apparatus 900 may further include a storage module. The storage module may be configured to store instructions and/or data. The processing module 902 may read the instructions and/or the data in the storage module, to enable the second apparatus to implement the foregoing method embodiments.

The second apparatus 900 may be configured to perform an action performed by the second apparatus in the foregoing method embodiments. The second apparatus 900 may be a second apparatus or a component that may be configured in a second apparatus. The processing module 902 is configured to perform a processing-related operation on a second apparatus side in the foregoing method embodiments. The transceiver module 901 is configured to perform a receiving-related operation on the second apparatus side in the foregoing method embodiments.

Optionally, the transceiver module 901 may include a sending module and a receiving module. The sending module is configured to perform a sending operation in the foregoing method embodiments. The receiving module is configured to perform a receiving operation in the foregoing method embodiments.

It should be noted that the second apparatus 900 may include the sending module, but does not include the receiving module. Alternatively, the second apparatus 900 may include the receiving module, but does not include the sending module. Specifically, this may depend on whether the foregoing solution performed by the second apparatus 900 includes a sending action and a receiving action.

Optionally, the second apparatus 900 is configured to perform an action performed by the second apparatus in the embodiment shown in FIG. 4. For details, refer to the related descriptions in the embodiment shown in FIG. 4. Details are not described herein again. For example, the second apparatus 900 is configured to perform the following solution.

The transceiver module 901 is configured to: send first training data to a first apparatus; and receive, from the first apparatus, at least one of the following: an intermediate training parameter, a loss value, or a weighted value, where the intermediate training parameter or the loss value is determined based on augmented training data, and the augmented training data is obtained by performing data augmentation on the first training data; and the weighted value is determined based on the intermediate training parameter or the loss value.

For other implementations, refer to the detailed descriptions of the embodiment shown in FIG. 4. Details are not described herein again.

It should be understood that a specific process in which the modules perform the foregoing corresponding process has been described in detail in the foregoing method embodiment. For brevity, details are not described herein again.

The processing module 902 in the foregoing embodiment may be implemented by at least one processor or a processor-related circuit. The transceiver module 901 may be implemented by a transceiver or a transceiver-related circuit. The transceiver module 901 may also be referred to as a communication module or a communication interface. The storage module may be implemented by at least one memory.

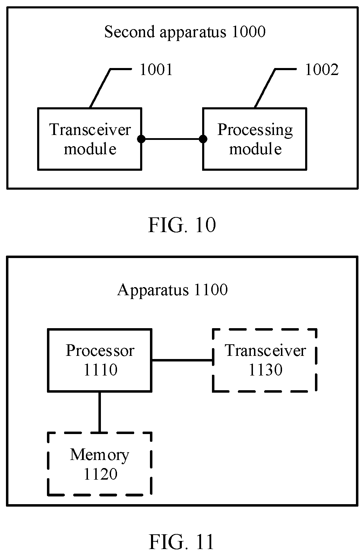

FIG. 10 is a diagram of another structure of a second apparatus according to an embodiment of this application. Refer to FIG. 10. The second apparatus may be configured to perform a process performed by the second apparatus in the embodiment shown in FIG. 6. For details, refer to related descriptions in the foregoing method embodiments.

The second apparatus 1000 includes a transceiver module 1001 and a processing module 1002.

The processing module 1002 is configured to perform data processing. The transceiver module 1001 may implement a corresponding communication function. The transceiver module 1001 may also be referred to as a communication interface or a communication module.

Optionally, the second apparatus 1000 may further include a storage module. The storage module may be configured to store instructions and/or data. The processing module 1002 may read the instructions and/or the data in the storage module, to enable the second apparatus to implement the foregoing method embodiments.

The second apparatus 1000 may be configured to perform an action performed by the second apparatus in the foregoing method embodiments. The second apparatus 1000 may be a second apparatus or a component that may be configured in a second apparatus. The processing module 1002 is configured to perform a processing-related operation on a second apparatus side in the foregoing method embodiments. The transceiver module 1001 is configured to perform a receiving-related operation on the second apparatus side in the foregoing method embodiments.

Optionally, the transceiver module 1001 may include a sending module and a receiving module. The sending module is configured to perform a sending operation in the foregoing method embodiments. The receiving module is configured to perform a receiving operation in the foregoing method embodiments.

It should be noted that the second apparatus 1000 may include the sending module, but does not include the receiving module. Alternatively, the second apparatus 1000 may include the receiving module, but does not include the sending module. Specifically, this may depend on whether the foregoing solution performed by the second apparatus 1000 includes a sending action and a receiving action.

Optionally, the second apparatus 1000 is configured to perform an action performed by the second apparatus in the embodiment shown in FIG. 6. For details, refer to the related descriptions in the embodiment shown in FIG. 6. Details are not described herein again. For example, the second apparatus 1000 is configured to perform the following solution.

The processing module 1002 is configured to perform data augmentation on first training data, to obtain augmented training data.

The transceiver module 1001 is configured to send the augmented training data to a first apparatus.

For other implementations, refer to the detailed descriptions of the embodiment shown in FIG. 6. Details are not described herein again.

It should be understood that a specific process in which the modules perform the foregoing corresponding process has been described in detail in the foregoing method embodiment. For brevity, details are not described herein again.

The processing module 1002 in the foregoing embodiment may be implemented by at least one processor or a processor-related circuit. The transceiver module 1001 may be implemented by a transceiver or a transceiver-related circuit. The transceiver module 1001 may also be referred to as a communication module or a communication interface. The storage module may be implemented by at least one memory.

An embodiment of this application further provides an apparatus 1100. Refer to FIG. 11. The apparatus 1100 includes a processor 1110. The processor 1110 is coupled to a memory 1120. The memory 1120 is configured to store a computer program or instructions and/or data. The processor 1110 is configured to execute the computer program or instructions and/or the data stored in the memory 1120, to perform the method in the method embodiments. The apparatus 1100 is configured to implement an operation performed by the first apparatus or the second apparatus in the foregoing method embodiments.

Optionally, the apparatus 1100 includes one or more processors 1110.

Optionally, as shown in FIG. 11, the apparatus 1100 may further include the memory 1120.

Optionally, the apparatus 1100 may include one or more memories 1120.

Optionally, the memory 1120 and the processor 1110 may be integrated, or separately disposed.

Optionally, as shown in FIG. 11, the apparatus 1100 may further include a transceiver 1130. The transceiver 1130 is configured to receive and/or send signals. For example, the processor 1110 is configured to control the transceiver 1130 to receive and/or send the signals.

This application further provides an apparatus 1200. The apparatus 1200 may be a terminal device, a processor of a terminal device, or a chip. The apparatus 1200 may be configured to implement an operation performed by the first apparatus or the second apparatus in the foregoing method embodiments.

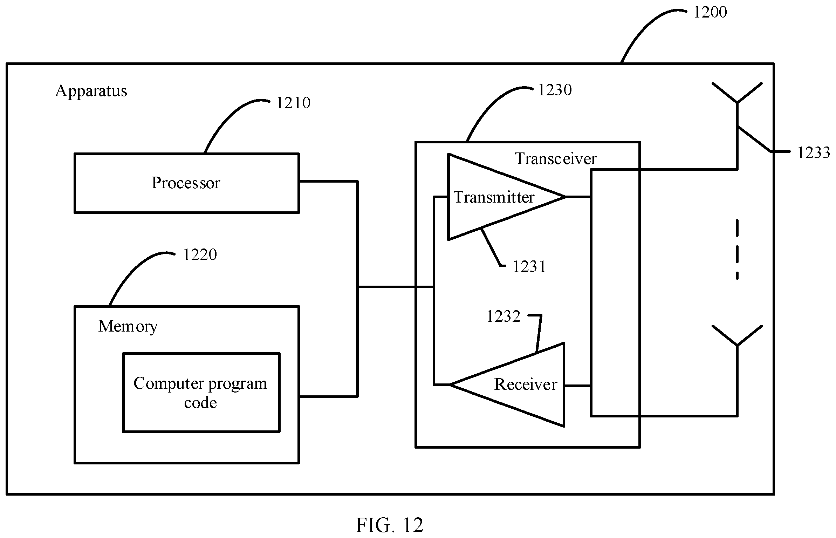

When the apparatus 1200 is the terminal device, FIG. 12 is a diagram of a simplified structure of the terminal device. As shown in FIG. 12, the terminal device includes a processor, a memory, and a transceiver. The memory may store computer program code. The transceiver includes a transmitter 1231, a receiver 1232, a radio frequency circuit (not shown in the figure), an antenna 1233, and an input/output apparatus (not shown in the figure).

The processor is mainly configured to: process a communication protocol and communication data, control the terminal device, execute a software program, process data of the software program, and the like.

The memory is mainly configured to store the software program and the data.

The radio frequency circuit is mainly configured to: perform conversion between a baseband signal and a radio frequency signal, and process the radio frequency signal.

The antenna is mainly configured to receive and send radio frequency signals in a form of an electromagnetic wave.

The input/output apparatus may include a touchscreen, a display, a keyboard, or the like. The input/output apparatus is mainly configured to: receive data input by a user, and output data to the user. It should be noted that some types of terminal devices may have no input/output apparatus.

When data needs to be sent, the processor outputs the baseband signal to the radio frequency circuit after performing baseband processing on the to-be-sent data. Then, the radio frequency circuit performs radio frequency processing on the baseband signal, and then sends the radio frequency signal to the outside in a form of an electromagnetic wave through the antenna. When data is sent to the terminal device, the radio frequency circuit receives the radio frequency signal through the antenna. The radio frequency circuit converts the radio frequency signal into the baseband signal, and outputs the baseband signal to the processor. The processor converts the baseband signal into data, and processes the data. For ease of description, FIG. 12 shows only one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have sending and receiving functions may be considered as a transceiver module of the terminal device, and the processor that has a processing function may be considered as a processing module of the terminal device.

As shown in FIG. 12, the terminal device includes a processor 1210, a memory 1220, and a transceiver 1230. The processor 1210 may also be referred to as a processing unit, a processing board, a processing module, a processing apparatus, or the like. The transceiver 1230 may also be referred to as a transceiver unit, a transceiver machine, a transceiver apparatus, or the like.

Optionally, a component that is in the transceiver 1230 and that is configured to implement a receiving function may be considered as a receiving module, and a component that is in the transceiver 1230 and that is configured to implement a sending function may be considered as a sending module. In other words, the transceiver 1230 includes a receiver and a transmitter. The transceiver may also be sometimes referred to as a transceiver machine, a transceiver module, a transceiver circuit, or the like. The receiver may also be sometimes referred to as a receiver machine, a receiving module, a receiver circuit, or the like. The transmitter may also be sometimes referred to as a transmitter machine, a transmitting module, a transmitter circuit, or the like.

The processor 1210 is configured to perform a processing action on a first apparatus side or a second apparatus side in the embodiments shown in FIG. 4 and FIG. 6. The transceiver 1230 is configured to perform receiving and sending actions on the first apparatus side or the second apparatus side in the embodiments shown in FIG. 4 and FIG. 6.

It should be understood that FIG. 12 is merely an example rather than a limitation. The terminal device including the transceiver module and the processing module may not depend on the structure shown in FIG. 7, FIG. 8, FIG. 9, FIG. 10, FIG. 11, or FIG. 12.

When the apparatus 1200 is a chip, the chip includes a processor, a memory, and a transceiver. The transceiver may be an input/output circuit or a communication interface. The processor may be a processing module, a microprocessor, or an integrated circuit integrated on the chip. A sending operation of the first apparatus or the second apparatus in the foregoing method embodiments may be understood as an output of the chip, and a receiving operation of the first apparatus or the second apparatus in the foregoing method embodiments may be understood as an input of the chip.

This application further provides an apparatus 1300. The apparatus 1300 may be a network device or a chip. The apparatus 1300 may be configured to perform an operation performed by the first apparatus or the second apparatus in the embodiments shown in FIG. 4 and FIG. 6.

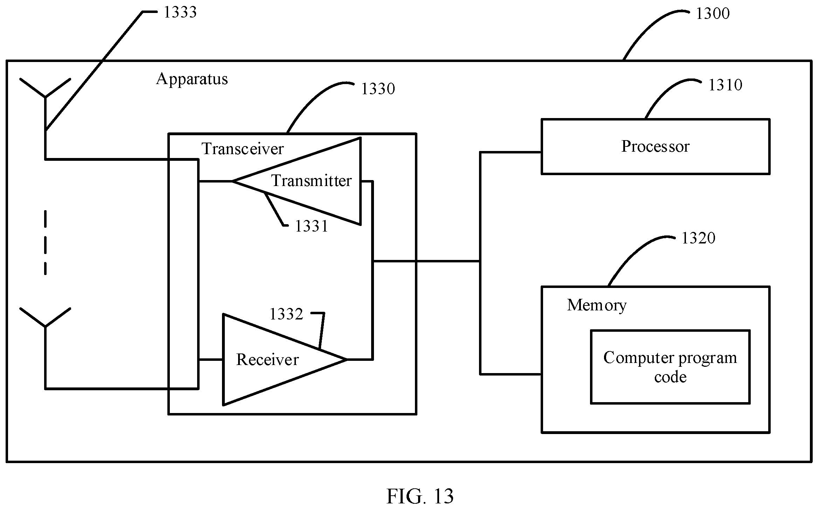

When the apparatus 1300 is a network device, for example, a base station, FIG. 13 is a diagram of a simplified structure of the base station. The base station includes a part 1310, a part 1320, and a part 1330.

The part 1310 is mainly configured to: perform baseband processing, control the base station, and the like. The part 1310 is usually a control center of the base station, may be usually referred to as a processor, and is configured to control the base station to perform a processing operation on a first apparatus side or a second apparatus side in the foregoing method embodiments.

The part 1320 is mainly configured to store computer program code and data.

The part 1330 is mainly configured to: send or receive a radio frequency signal, and perform conversion between the radio frequency signal and a baseband signal. The part 1330 may be usually referred to as a transceiver module, a transceiver machine, a transceiver circuit, a transceiver, or the like. The transceiver module in the part 1330 may also be referred to as a transceiver machine, a transceiver, or the like, and includes an antenna 1333 and a radio frequency circuit (not shown in the figure). The radio frequency circuit is mainly configured to perform radio frequency processing. Optionally, a component configured to implement a receiving function in the part 1330 may be considered as a receiver machine, and a component configured to implement a sending function may be considered as a transmitter machine. In other words, the part 1330 includes the receiver machine 1332 and the transmitter machine 1331. The receiver may also be referred to as a receiving module, a receiver machine, a receiver circuit, or the like, and the transmitter may be referred to as a transmitting module, a transmitter machine, a transmitter circuit, or the like.

The part 1310 and the part 1320 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, a plurality of boards may share one or more processors, or a plurality of boards share one or more memories, or a plurality of boards share one or more processors at the same time.

For example, in an implementation, the transceiver module in the part 1330 is configured to perform a receiving/sending-related process performed by the first apparatus or the second apparatus in the embodiments shown in FIG. 4 and FIG. 6. The processor in the part 1310 is configured to perform a processing-related process performed by the first apparatus or the second apparatus in the embodiments shown in FIG. 4 and FIG. 6.

It should be understood that FIG. 13 is merely an example rather than a limitation. The network device including the processor, the memory, and the transceiver may not depend on the structure shown in FIG. 7, FIG. 8, FIG. 9, FIG. 10, FIG. 11, or FIG. 13.

When the apparatus 1300 is a chip, the chip includes a transceiver, a memory, and a processor. The transceiver may be an input/output circuit or a communication interface. The processor is a processor, a microprocessor, or an integrated circuit integrated on the chip. A sending operation of the first apparatus or the second apparatus in the foregoing method embodiments may be understood as an output of the chip, and a receiving operation of the first apparatus or the second apparatus in the foregoing method embodiments may be understood as an input of the chip.

An embodiment of this application further provides a computer-readable storage medium. The computer-readable storage medium stores computer instructions for implementing the method performed by the first apparatus or the second apparatus in the foregoing method embodiments.

For example, when a computer program is executed by a computer, the computer is enabled to implement the method performed by the first apparatus or the second apparatus in the foregoing method embodiments.

An embodiment of this application further provides a computer program product including instructions. When the instructions are executed by a computer, the computer is enabled to implement the method performed by the first apparatus or the second apparatus in the foregoing method embodiments.

An embodiment of this application further provides a communication system. The communication system includes the first apparatus in the foregoing embodiments and the second apparatus in the foregoing embodiments. The first apparatus is configured to perform some or all operations performed by the first apparatus in the foregoing method embodiments, and the second apparatus is configured to perform some or all operations performed by the second apparatus in the foregoing method embodiments.

An embodiment of this application further provides a chip apparatus, including a processor, configured to invoke a computer program or computer instructions stored in a memory, to enable the processor to perform the methods provided in the embodiments shown in FIG. 4 and FIG. 6.

In a possible implementation, an input of the chip apparatus corresponds to a receiving operation in any one of the embodiments shown in FIG. 4 and FIG. 6, and an output of the chip apparatus corresponds to a sending operation in any one of the embodiments shown in FIG. 4 and FIG. 6.

Optionally, the processor is coupled to the memory through an interface.

Optionally, the chip apparatus further includes the memory, and the memory stores the computer program or the computer instructions.

The processor mentioned anywhere above may be a general-purpose central processing unit, a microprocessor, an application-specific integrated circuit (application-specific integrated circuit, ASIC), or one or more integrated circuits for controlling program execution of the method provided in any one of the embodiments shown in FIG. 4 and FIG. 6. The memory mentioned anywhere above may be a read-only memory (read-only memory, ROM), another type of static storage device that can store static information and instructions, a random access memory (random access memory, RAM), or the like.

It may be clearly understood by a person skilled in the art that for convenience and brevity of description, for explanation and beneficial effect of related content in any one of the apparatuses provided above, reference may be made to the foregoing corresponding method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or the communication connections between the apparatuses or units may be implemented in electronic, mechanical, or other forms.

The units described as separate components may or may not be physically separate, and parts displayed as units may or may not be physical units, may be located in one place, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit. The integrated unit may be implemented in a form of hardware, or may be implemented in a form of software functional unit.

When the integrated unit is implemented in the form of the software functional unit and sold or used as an independent product, the integrated unit may be stored in a computer-readable storage medium. Based on such an understanding, the technical solutions in this application essentially, the part contributing, or all or a part of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

In conclusion, the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

## Claims

1. A data processing method, wherein the method comprises:

   receiving, by a first apparatus, first training data from a second apparatus; and
   performing, by the first apparatus, data augmentation on the first training data, to obtain augmented training data.

2. The method according to claim 1, wherein the method further comprises:

   obtaining, by the first apparatus, a data augmentation configuration; and
   performing, by the first apparatus, data augmentation on the first training data, to obtain the augmented training data comprises:
   performing, by the first apparatus, data augmentation on the first training data based on the data augmentation configuration, to obtain the augmented training data.

3. The method according to claim 2, wherein obtaining, by the first apparatus, the data augmentation configuration comprises:
   receiving, by the first apparatus, first indication information from the second apparatus, wherein the first indication information indicates the data augmentation configuration.

4. The method according to claim 2, wherein before obtaining, by the first apparatus, the data augmentation configuration, the method further comprises:

   receiving, by the first apparatus, second indication information from the second apparatus, wherein the second indication information indicates a data augmentation configuration available to the first apparatus; and
   obtaining, by the first apparatus, the data augmentation configuration comprises:
   obtaining, by the first apparatus, the data augmentation configuration based on the data augmentation configuration that is available to the first apparatus and that is indicated by the second indication information.

5. The method according to any one of claims 2 to 4, wherein the data augmentation configuration comprises at least one of the following: a data augmentation method, a data augmentation parameter, or a quantity of augmented samples.

6. The method according to claim 5, wherein the data augmentation method comprises at least one of the following: noise addition, signal phase rotation, signal random phase processing, channel simulation processing, or signal rearrangement.

7. The method according to claim 5 or 6, wherein the data augmentation parameter comprises at least one of the following: noise power, a signal phase rotation angle, distribution or a range of random phases used for the signal random phase processing, a ratio of amplitudes of elements of a diagonal matrix used for the channel simulation processing, or a rearrangement unit of a signal in time domain and/or frequency domain.

8. The method according to any one of claims 1 to 7, wherein the method further comprises:
training, by the first apparatus, a receiving model of the first apparatus based on the augmented training data, wherein the receiving model is used by the first apparatus to receive data and/or information.

9. The method according to claim 8, wherein the receiving model is configured to implement at least one of the following: channel estimation, equalization, channel decoding, symbol demodulation, waveform demodulation, or source decoding.

10. The method according to any one of claims 1 to 9, wherein the method further comprises:

   generating, by the first apparatus, an intermediate training parameter and/or a loss value based on the augmented training data; and
   sending, by the first apparatus to the second apparatus, at least one of the following: the intermediate training parameter, the loss value, or a weighted value, wherein the weighted value is determined based on the intermediate training parameter or the loss value.

11. The method according to any one of claims 1 to 10, wherein the first training data comprises channel data between the first apparatus and the second apparatus; and before receiving, by the first apparatus, the first training data from the second apparatus, the method further comprises:
sending, by the first apparatus, a reference signal to the second apparatus, wherein the reference signal is used to determine the channel data.

12. A data processing method, wherein the method comprises:
sending, by a second apparatus, first training data to a first apparatus, wherein the first training data is configured to perform data augmentation on the first training data, to obtain augmented training data.

13. The method according to claim 12, wherein the method further comprises:
sending, by the second apparatus, first indication information to the first apparatus, wherein the first indication information indicates a data augmentation configuration, and the data augmentation configuration is used to perform data augmentation on the first training data.

14. The method according to claim 12, wherein the method further comprises:
sending, by the second apparatus, second indication information to the first apparatus, wherein the second indication information indicates a data augmentation configuration available to the first apparatus.

15. The method according to claim 13 or 14, wherein the data augmentation configuration comprises at least one of the following: a data augmentation method, a data augmentation parameter, or a quantity of augmented samples.

16. The method according to claim 15, wherein the data augmentation method comprises any one of the following: noise addition, signal phase rotation, signal random phase processing, channel simulation processing, or signal rearrangement.

17. The method according to claim 15 or 16, wherein the data augmentation parameter comprises at least one of the following: noise power, a signal phase rotation angle, distribution or a range of random phases used for the signal random phase processing, a ratio of amplitudes of elements of a diagonal matrix used for the channel simulation processing, or a rearrangement unit of a signal in time domain and/or frequency domain.

18. The method according to any one of claims 13 to 17, wherein the data augmentation configuration is determined based on a configuration of a receiving model of the first apparatus, a configuration of a sending model of the second apparatus, and/or a change speed of a channel between the first apparatus and the second apparatus, the receiving model is used by the first apparatus to receive data and/or information, and the sending model is used by the second apparatus to send data and/or information.

19. The method according to any one of claims 12 to 18, wherein the method further comprises:

   receiving, by the second apparatus from the first apparatus, at least one of the following: an intermediate training parameter, a loss value, or a weighted value, wherein the intermediate training parameter or the loss value is determined based on the augmented training data, and the weighted value is determined based on the intermediate training parameter or the loss value; and

training, by the second apparatus, the sending model of the second apparatus based on at least one of the intermediate training parameter, the loss value, and the weighted value, wherein the sending model is used by the second apparatus to send data and/or information.

20. The method according to claim 19, wherein the sending model is configured to implement at least one of the following: channel encoding, symbol modulation, waveform modulation, or source encoding.

21. The method according to any one of claims 12 to 20, wherein the first training data comprises channel data between the first apparatus and the second apparatus; and the method further comprises:

receiving, by the second apparatus, a reference signal from the first apparatus; and
measuring, by the second apparatus, the reference signal, to obtain the channel data.

22. A data processing method, wherein the method comprises:
receiving, by a first apparatus, augmented training data from a second apparatus, wherein the augmented training data is obtained by performing data augmentation on first training data.

23. The method according to claim 22, wherein the method further comprises:
sending, by the first apparatus, first indication information to the second apparatus, wherein the first indication information indicates the data augmentation configuration, and the data augmentation configuration is used to perform data augmentation on the first training data.

24. The method according to claim 22, wherein the method further comprises:
sending, by the first apparatus, second indication information to the second apparatus, wherein the second indication information indicates a data augmentation configuration available to the second apparatus.

25. The method according to claim 23 or 24, wherein the data augmentation configuration comprises at least one of the following: a data augmentation method, a data augmentation parameter, or a quantity of augmented samples.

26. The method according to claim 25, wherein the data augmentation method comprises any one of the following: noise addition, signal phase rotation, signal random phase processing, channel simulation processing, or signal rearrangement.

27. The method according to claim 25 or 26, wherein the data augmentation parameter comprises at least one of the following: noise power, a signal phase rotation angle, distribution or a range of random phases used for the signal random phase processing, a ratio of amplitudes of elements of a diagonal matrix used for the channel simulation processing, or a rearrangement unit of a signal in time domain and/or frequency domain.

28. The method according to any one of claims 22 to 27, wherein the method further comprises:

determining, by the first apparatus, an intermediate training parameter and/or a loss value based on the augmented training data; and
sending, by the first apparatus to the second apparatus, at least one of the following: the intermediate training parameter, the loss value, or a weighted value, wherein the intermediate training parameter or the loss value is determined based on the augmented training data, and the weighted value is determined based on the intermediate training parameter or the loss value.

29. The method according to any one of claims 22 to 28, wherein the method further comprises:
training, by the first apparatus, a receiving model of the first apparatus based on the augmented training data, wherein the receiving model is used by the first apparatus to receive data and/or information.

30. The method according to claim 29, wherein the receiving model is configured to implement at least one of the following: channel estimation, equalization, channel decoding, symbol demodulation, waveform demodulation, or source decoding.

31. The method according to any one of claims 22 to 30, wherein the first training data comprises channel data between the first apparatus and the second apparatus; and before receiving, by the first apparatus, the augmented training data from the second apparatus, the method further comprises:
sending, by the first apparatus, a reference signal to the second apparatus, wherein the reference signal is used to determine the channel data.

32. A data processing method, wherein the method comprises:

performing, by a second apparatus, data augmentation on first training data, to obtain augmented training data; and
sending, by the second apparatus, the augmented training data to a first apparatus.

33. The method according to claim 32, wherein the method further comprises:

obtaining, by the second apparatus, a data augmentation configuration; and
performing, by the second apparatus, data augmentation on the first training data, to obtain the augmented training data comprises:
performing, by the second apparatus, data augmentation on the first training data based on the data augmentation configuration, to obtain the augmented training data.

34. The method according to claim 33, wherein obtaining, by the second apparatus, the data augmentation configuration comprises:
receiving, by the second apparatus, first indication information from the first apparatus, wherein the first indication information indicates the data augmentation configuration.

35. The method according to claim 33, wherein the method further comprises:

receiving, by the second apparatus, second indication information from the first apparatus, wherein the second indication information indicates a data augmentation configuration available to the first apparatus; and
obtaining, by the second apparatus, the data augmentation configuration comprises:
obtaining, by the second apparatus, the data augmentation configuration based on the data augmentation configuration that is available to the first apparatus and that is indicated by the second indication information.

36. The method according to any one of claims 33 to 35, wherein the data augmentation configuration comprises at least one of the following: a data augmentation method, a data augmentation parameter, or a quantity of augmented samples.

37. The method according to claim 36, wherein the data augmentation method comprises any one of the following: noise addition, signal phase rotation, signal random phase processing, channel simulation processing, or signal rearrangement.

38. The method according to claim 36 or 37, wherein the data augmentation parameter comprises at least one of the following: noise power, a signal phase rotation angle, distribution or a range of random phases used for the signal random phase processing, a ratio of amplitudes of elements of a diagonal matrix used for the channel simulation processing, or a rearrangement unit of a signal in time domain and/or frequency domain.

39. The method according to any one of claims 32 to 38, wherein the method further comprises:

receiving, by the second apparatus from the first apparatus, at least one of the following: an intermediate training parameter, a loss value, or a weighted value, wherein the intermediate training parameter or the loss value is determined based on the augmented training data, and the weighted value is determined based on the intermediate training parameter or the loss value; and
training, by the second apparatus, a sending model of the second apparatus based on at least one of the intermediate training parameter, the loss value, and the weighted value, wherein the sending model is used by the second apparatus to send data and/or information.

40. The method according to claim 39, wherein the sending model is configured to implement at least one of the following: channel encoding, symbol modulation, waveform modulation, or source encoding.

41. The method according to any one of claims 32 to 40, wherein the first training data comprises channel data between the first apparatus and the second apparatus; and the method further comprises:

receiving, by the second apparatus, a reference signal from the first apparatus; and
measuring, by the second apparatus, the reference signal, to obtain the channel data.

42. An apparatus, wherein the apparatus comprises a transceiver module and a processing module, wherein

the transceiver module is configured to perform receiving and sending operations in the method according to any one of claims 1 to 11, and the processing module is configured to perform a processing operation in the method according to any one of claims 1 to 11; or
the transceiver module is configured to perform receiving and sending operations in the method according to any one of claims 32 to 41, and the processing module is configured to perform a processing operation in the method according to any one of claims 32 to 41.

43. An apparatus, wherein the apparatus comprises a transceiver module, wherein
the transceiver module is configured to perform receiving and sending operations in the method according to any one of claims 12 to 21; or the transceiver module is configured to perform receiving and sending operations in the method according to any one of claims 22 to 31.

44. The apparatus according to claim 43, wherein the apparatus further comprises a processing module, wherein

when the transceiver module is configured to perform the receiving and sending operations in the method according to any one of claims 12 to 21, the processing module is configured to perform receiving and sending operations in the method according to any one of claims 12 to 21; or
when the transceiver module is configured to perform the receiving and sending operations in the method according to any one of claims 22 to 31, the processing module is configured to perform a processing operation in the method according to any one of claims 22 to 31.

45. An apparatus, wherein the apparatus comprises a processor, and the processor is configured to execute a computer program or computer instructions in a memory, to perform the method according to any one of claims 1 to 41.

46. A computer-readable storage medium, wherein the computer-readable storage medium stores a computer program, and when the computer program is executed by an apparatus, the apparatus is enabled to perform the method according to any one of claims 1 to 41.

47. A communication system, wherein the communication system comprises a first apparatus and a second apparatus, wherein

the first apparatus is configured to perform the method according to any one of claims 1 to 11, and the second apparatus is configured to perform the method according to any one of claims 12 to 21; or
the first apparatus is configured to perform the method according to any one of claims 22 to 31, and the second apparatus is configured to perform the method according to any one of claims 32 to 41.

$x_k$ → **Transmitter (Sending model)** — $z_k$ → **Channel** — $y_k$ → **Receiver (Receiving model)** → $\overline{x}_k$

FIG. 1

**Source encoding** → **Channel encoding** → **Symbol modulation** → **Waveform modulation** →

FIG. 2A

| Waveform demodulation | → | Channel estimation | → | Channel equalization | → | Symbol demodulation | → | Channel decoding | → | Source decoding |

FIG. 2B

Core network
device

AI module

Access
network node 1    NG                    NG

Central unit CU 1         Central unit CU 2

AI module    Xn    AI module

F1                           F1

Distributed unit DU 1         Distributed unit DU 2

AI module                   AI module

OAM

AI module

Air
interface         Air
interface

Terminal device

AI module

FIG. 3A

FIG. 3B

FIG. 3C

```
┌─────────────────┐                              ┌─────────────────┐
│ Second apparatus│                              │ First apparatus │
└─────────────────┘                              └─────────────────┘
         │              401a: Reference signal            │
         │◄ ─ ─ ─ ─ ─ ─ ─ ─ ─ ─ ─ ─ ─ ─ ─ ─ ─ ─ ─ ─ ─ ─ │
  ┌ ─ ─ ─┴─ ─ ─ ─ ─ ─ ─ ─ ─ ─ ─ ─ ─ ─ ─ ─ ┐      │
  │ 401b: Measure the reference signal, to obtain │      │
  │          first training data          │      │
  └ ─ ─ ─ ─ ─ ─ ─ ─ ─ ─ ─ ─ ─ ─ ─ ─ ─ ─ ─ ┘      │
         │       401: First training data              │
         │ ──────────────────────────────────────────► │
  ┌ ─ ─ ─┼─ ─ ─ ─ ─ ─ ─ ─ ─ ─ ─ ─ ─ ─ ─ ─ ─ ─ ─ ┬ ─ ─ ─ ─ ─ ─ ─ ┐
  │      │  402a: First indication information       │ Implementation│
  │      │ ─ ─ ─ ─ ─ ─ ─ ─ ─ ─ ─ ─ ─ ─ ─ ─ ─ ─ ─► │       1       │
  └ ─ ─ ─┼─ ─ ─ ─ ─ ─ ─ ─ ─ ─ ─ ─ ─ ─ ─ ─ ─ ─ ─ ┴ ─ ─ ─ ─ ─ ─ ─ ┘
  ┌ ─ ─ ─┼─ ─ ─ ─ ─ ─ ─ ─ ─ ─ ─ ─ ─ ─ ─ ─ ─ ─ ─ ┬ ─ ─ ─ ─ ─ ─ ─ ┐
  │      │ 402b: Second indication information      │ Implementation│
  │      │ ─ ─ ─ ─ ─ ─ ─ ─ ─ ─ ─ ─ ─ ─ ─ ─ ─ ─ ─► │       2       │
  └ ─ ─ ─┼─ ─ ─ ─ ─ ─ ─ ─ ─ ─ ─ ─ ─ ─ ─ ─ ─ ─ ─ ┴ ─ ─ ─ ─ ─ ─ ─ ┘
         │                   ┌──────────────────────────────────────┐
         │                   │ 402: Perform data augmentation on the first │
         │                   │ training data, to obtain augmented training data │
         │                   └──────────────────────────────────────┘
         │         ┌ ─ ─ ─ ─ ─ ─ ─ ─ ─ ─ ─ ─ ─ ─ ─ ─ ─ ─ ─ ┐
         │         │    403: Train a receiving model of the first │
         │         │ apparatus based on the augmented training data │
         │         └ ─ ─ ─ ─ ─ ─ ─ ─ ─ ─ ─ ─ ─ ─ ─ ─ ─ ─ ─ ┘
         │         ┌ ─ ─ ─ ─ ─ ─ ─ ─ ─ ─ ─ ─ ─ ─ ─ ─ ─ ─ ─ ┐
         │         │    404: Generate an intermediate training │
         │         │ parameter and/or a loss value based on the │
         │         │          augmented training data          │
         │         └ ─ ─ ─ ─ ─ ─ ─ ─ ─ ─ ─ ─ ─ ─ ─ ─ ─ ─ ─ ┘
         │   405: Send at least one of the following:        │
         │   the intermediate training parameter, the        │
         │   loss value, or a weighted value                 │
         │◄ ─ ─ ─ ─ ─ ─ ─ ─ ─ ─ ─ ─ ─ ─ ─ ─ ─ ─ ─ ─ ─ ─ ─ │
  ┌ ─ ─ ─┴─ ─ ─ ─ ─ ─ ─ ─ ─ ─ ─ ─ ─ ─ ─ ─ ┐      │
  │ 406: Train a sending model of the second │      │
  │    apparatus based on at least one of the │      │
  │  intermediate training parameter, the loss │      │
  │     value, and the weighted value         │      │
  └ ─ ─ ─ ─ ─ ─ ─ ─ ─ ─ ─ ─ ─ ─ ─ ─ ─ ─ ─ ┘      │
         │                                              │
```

FIG. 4

EP 4 779 906 A1

$x_0$ → | Tx Forward | → $z_0$ → | Channel h | → $y_0$ → | Data augmentation $h_A$ | → $y_k$ → | Rx Forward | → $\tilde{x}_k$ →

Loss value calculation

Intermediate training parameter, loss value, and/or weighted value

← | Tx Backward | ← | Rx Backward | ←

FIG. 5

```
┌──────────────────┐                              ┌──────────────────┐
│ Second apparatus │                              │  First apparatus │
└──────────────────┘                              └──────────────────┘
         │                601c: Reference signal             │
         │◄─ ─ ─ ─ ─ ─ ─ ─ ─ ─ ─ ─ ─ ─ ─ ─ ─ ─ ─ ─ ─ ─ ─ ─ │
  ┌─ ─ ─ ─ ─ ─ ─ ─ ─ ─ ─ ─ ─ ─ ─ ─ ─ ─ ─ ─ ─ ─ ─ ─ ─ ┐
  │ 601d: Measure the reference signal, to obtain first │
  │                  training data                      │
  └─ ─ ─ ─ ─ ─ ─ ─ ─ ─ ─ ─ ─ ─ ─ ─ ─ ─ ─ ─ ─ ─ ─ ─ ─ ┘
```

601a: First indication information (indicate a data augmentation configuration) — Implementation 1

601b: Second indication information (indicate a data augmentation configuration available to the second apparatus) — Implementation 2

601: Perform data augmentation on the first training data, to obtain augmented training data

602: Augmented training data

603: Train a receiving model of the first apparatus based on the augmented training data

604: Determine an intermediate training parameter and/or a loss value based on the augmented training data

605: Send at least one of the following: the intermediate training parameter, the loss value, or a weighted value

606: Train a sending model of the second apparatus based on at least one of the intermediate training parameter, the loss value, and the weighted value

FIG. 6

First apparatus 700

701

702

Transceiver module

Processing module

FIG. 7

First apparatus 800

801

802

Transceiver module

Processing module

FIG. 8

Second apparatus 900

901

902

Transceiver module

Processing module

FIG. 9

Second apparatus 1000

1001

1002

| Transceiver module | Processing module |

FIG. 10

Apparatus 1100

| Processor 1110 | Transceiver 1130 |

| Memory 1120 |

FIG. 11

FIG. 12

1300

Apparatus

1310

Processor

1320

Memory

Computer program code

1330

Transceiver

Transmitter

1331

1332

Receiver

1333

FIG. 13

## INTERNATIONAL SEARCH REPORT

| International application No. |
|---|
| **PCT/CN2023/119660** |

**A.    CLASSIFICATION OF SUBJECT MATTER**

H04L 1/00(2006.01)i

According to International Patent Classification (IPC) or to both national classification and IPC

**B.    FIELDS SEARCHED**

Minimum documentation searched (classification system followed by classification symbols)

IPC:H04L G06F

Documentation searched other than minimum documentation to the extent that such documents are included in the fields searched

Electronic data base consulted during the international search (name of data base and, where practicable, search terms used)

CNTXT; ENTXTC; ENTXT; DWPI; VEN; CNKI; IEEE: 训练, 数据, 增强, 配置, 方法, 方式, 加噪声, 旋转, 信道, train, data, enhance, configuration, method, mode, add, noise, rotate, channel

**C.    DOCUMENTS CONSIDERED TO BE RELEVANT**

| Category* | Citation of document, with indication, where appropriate, of the relevant passages | Relevant to claim No. |
|---|---|---|
| X | CN 116318481 A (HUAWEI TECHNOLOGIES CO., LTD.) 23 June 2023 (2023-06-23) description, paragraphs [0084]-[0238] | 1-21, 42-47 |
| Y | CN 116318481 A (HUAWEI TECHNOLOGIES CO., LTD.) 23 June 2023 (2023-06-23) description, paragraphs [0084]-[0238] | 23-27, 33-38 |
| X | CN 115879541 A (ALIBABA (CHINA) CO., LTD.) 31 March 2023 (2023-03-31) description, paragraphs [0057]-[0079] | 22, 28-32, 39-47 |
| Y | CN 115879541 A (ALIBABA (CHINA) CO., LTD.) 31 March 2023 (2023-03-31) description, paragraphs [0057]-[0079] | 23-27, 33-38 |
| A | CN 113837279 A (SUZHOU INSPUR INTELLIGENT TECHNOLOGY CO., LTD.) 24 December 2021 (2021-12-24) entire document | 1-47 |
| A | US 2019354895 A1 (GOOGLE LLC) 21 November 2019 (2019-11-21) entire document | 1-47 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **04 June 2024** | **11 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/119660**

| Patent document cited in search report | | | Publication date (day/month/year) | Patent family member(s) | | | Publication date (day/month/year) |
|---|---|---|---|---|---|---|---|
| CN | 116318481 | A | 23 June 2023 | WO | 2023116655 | A1 | 29 June 2023 |
| CN | 115879541 | A | 31 March 2023 | None | | | |
| CN | 113837279 | A | 24 December 2021 | None | | | |
| US | 2019354895 | A1 | 21 November 2019 | KR | 20200110400 | A | 23 September 2020 |
| | | | | JP | 2021518939 | A | 05 August 2021 |
| | | | | EP | 3732628 | A1 | 04 November 2020 |
| | | | | US | 2021019658 | A1 | 21 January 2021 |
| | | | | WO | 2019222734 | A1 | 21 November 2019 |
| | | | | CN | 111758105 | A | 09 October 2020 |

Form PCT/ISA/210 (patent family annex) (July 2022)